# EUROPÄISCHE PATENTSCHRIFT

(11) **EP 3 352 416 B1**
(45) Veröffentlichungstag und Bekanntmachung des Hinweises auf die Patenterteilung: **15.05.2019**
(21) Anmeldenummer: 17152197.4
(22) Anmeldetag: 19.01.2017
(51) Int. Cl.: H04L 12/24

(54) **NETZWERKINVENTARISIERUNGSSYSTEM**
NETWORK INVENTORY CONTROL SYSTEM
SYSTÈME D'INVENTAIRE DE RÉSEAU

(43) Veröffentlichungstag der Anmeldung: 25.07.2018
(73) Patentinhaber: Deutsche Telekom AG, 53113 Bonn (DE)
(72) Erfinder: Eggert, Markus, 53773 Hennef (DE)
(74) Vertreter: Patentship Patentanwaltsgesellschaft mbH

(56) Entgegenhaltungen:
- EP-A1- 2 869 495
- EP-A1- 3 059 929
- US-A1- 2007 088 630

## Beschreibung

Die vorliegende Erfindung betrifft ein Netzwerkinventarisierungssystem mit einem Inventarisierungsserver zum Inventarisieren eines Computernetzwerks mit einer Mehrzahl von Computern, welche Netzwerkendpunkte in dem Computernetzwerk bilden, sowie einen solchen Inventarisierungsserver und ein Verfahren zum Inventarisieren eines Computernetzwerks. Die Erfindung betrifft insbesondere Techniken zur Erstellung des Inventars eines Computernetzwerks mit Kontrolle von Vollständigkeit und Überschneidungsfreiheit durch rein passive Analyse der Endpunkte.

Computernetzwerke verändern sich ständig und die Geschwindigkeit dieser Veränderung wächst stetig. Diese Veränderungen zu dokumentieren ist in vielerlei Hinsicht wichtig, z.B. für spezielle Security-Analysen, aber auch für den ganz alltäglichen Betrieb der Netzwerke und deren Entstörung im Fehlerfall. Viele Unternehmen sind auch mit dem Problem der sogenannten "Schatten-IT" konfrontiert, in der undokumentiert IT-Anwendungen im Unternehmensnetzwerk implementiert aber nicht inventarisiert werden. Die Analyse des aktuellen Netzwerk-Status geschieht heutzutage vornehmlich über die Netzwerk-Geräte wie Switches und Router, indem entweder die Konfiguration der Geräte analysiert wird oder indem der Netzwerk-Verkehr, der über diese Geräte fließt, analysiert wird (z.B. über die Analyse von Netflow-Daten, die auf den Netzwerk-Geräten erzeugt werden). Die Endpunkte des Netzwerk-Verkehrs (Clients und Server) werden als Quellen für die Analyse nicht mit einbezogen, solange sie nicht aktiv am Verkehr teilnehmen.

Auf den Endpunkten des Netzwerks (Clients und Server) liegen eine große Menge an Informationen vor, die in die Betrachtung bisher nicht einbezogen werden, wodurch die Netzwerk-Analyse unter Umständen nur unvollständig bleibt oder auf die Unterstützung durch aktive Elemente angewiesen ist (z.B. Netzwerk-Scanner von Nessus® oder Nmap.org). Außerdem besitzen die Netzwerk-Elemente selten Wissen über die an das Netzwerk angeschlossenen Endpunkte oder Applikationen.

Die Druckschrift EP 2 869 495 A1 bezieht sich auf das Aufspüren von Knoten in einem Netzwerk.

Es ist die Aufgabe der vorliegenden Erfindung, ein Konzept zum automatisierten Erstellen eines Inventars eines Computer-Netzwerks zu schaffen, insbesondere dem Administrator eines Unternehmensnetzwerks einen Überblick über die einzelnen Endpunkte, d.h. Client-und Server-Computer seines dynamisch veränderlichen Computer-Netzwerks zu verschaffen.

Ferner ist es Aufgabe der Erfindung, das so erstellte Inventar automatisiert auf Vollständigkeit und Überschneidungsfreiheit zu prüfen, d.h. festzustellen, ob alle Endpunkte, die sich laut Analyse im Netzwerk befinden müssen, bereits inventarisiert wurden oder ob es Endpunkte gibt, deren Eigenschaften doppelt im Netzwerk vorhanden sind.

Eine weitere Aufgabe der Erfindung besteht darin, Unregelmäßigkeiten des Computernetzwerks zu erkennen, die beispielsweise durch bösartige Manipulationsversuche, Viren, Schadsoftware, etc. das Computernetzwerk beeinträchtigen.

Diese Aufgabe wird durch die Merkmale der unabhängigen Ansprüche gelöst. Vorteilhafte Weiterbildungsformen sind Gegenstand der abhängigen Ansprüche.

Im Gegensatz zu den anderen, oben beschriebenen Methoden ist mit der hier vorgestellten Lösung keine aktive Beteiligung der Netzwerkkomponenten notwendig und es sind ebenfalls keine Aktivitäten der Endpunkte im Netzwerk gefordert, z.B. Netzwerk-Scans.

Im Folgenden wird die Wirkungsweise der hier offenbarten Lösungen näher erläutert. Auf den Endpunkten eines Computer-Netzwerks, d.h. auf den Clients und den Servern des Computer-Netzwerks, stehen in großer Menge sowohl Informationen über das Netzwerk, in dem sich der Endpunkt befindet, als auch Informationen über die anderen Endpunkte, mit denen dieser Endpunkt kommuniziert, zur Verfügung. Diese sind z.B. (ohne Anspruch auf Vollständigkeit) die folgenden Konfigurations- und Steuerungsbefehle, die sich vom Betriebssystem automatisiert auf dem Endpunkt aufrufen lassen: A) "ifconfig" (alte Bezeichnung) oder "ip" (neue Bezeichnung) bzw. "ipconfig": Zeigt die Konfiguration der Netzwerk-Schnittstellen des lokalen Systems an und bildet damit die Basis für die Analysen. Hier sind sowohl die MAC-Adresse(n) als auch die IP-Adresse(n) einer Schnittstelle ermittelbar. B) "arp": Zeigt die dem Endpunkt bekannte Zuordnung von IP-Adressen zu MAC-Adressen an und gibt dabei Hinweise, welche anderen Geräte sich im selben Subnetz befinden. C) "route": Zeigt die Routing-Einstellungen des Endpunkts an, also z.B. auch welche Netze über welches Gateway erreicht werden können. D) "netstat": Zeigt je nach Kommandozeilen-Parameter welche Dienste auf den IP-Schnittstellen des Systems angeboten werden und welche Kommunikationsbeziehungen derzeit existieren bzw. etabliert sind. E) "nslookup" / "dig": Zeigt die Konfiguration des DNS (Domain Name System)-Dienstes, also zumindest welche(r) DNS-Server für die Namensauflösung zur Verfügung steht. Auf manchen Endpunkten lässt sich auch der DNS-Cache auslesen, womit sich unter Umständen weitere Rückschlüsse auf die Kommunikationsbeziehungen des Endpunkts ergeben. Diese Informationen können einmalig oder zyklisch auf den Endpunkten erfasst und dann an eine zentrale Instanz im Netzwerk gesendet oder von der zentralen Instanz abgeholt werden (wobei das Senden der Informationen sicherheitstechnisch zu bevorzugen ist). In der zentralen Instanz werden die Informationen ausgewertet und für die Darstellung aufbereitet.

Für eine Realisierung des Ziels wird im Folgenden das Vorgehen beispielhaft dargestellt: Aus der Summe aller erfassten Informationen wird zunächst einmal eine Liste aller Endpunkte und der Interfaces, d.h. Schnittstellen dieser Endpunkte erstellt. D.h., es wird eine IST-Liste oder ein INVENTAR des Computernetzwerks, ermittelt, z.B. mit dem Befehl "ip", "ifconfig" oder "ipconfig" auf den Endpunkten. Im nächsten Schritt wird auf Basis der ARP-Tabelle aller Endpunkte, welche z.B. mit dem Befehl "arp" auf den Endpunkten werden kann, eine Liste aller den Endpunkten bekannten Interfaces in deren lokalen Netzwerken erstellt (d.h. eine sogenannte SOLL-Liste). Jedes Interface ist dabei durch die Parameter: MAC-Adresse und IP-Adresse charakterisiert. Auf Basis der Ergebnisse des Befehls "netstat" wird ermittelt, mit welchen anderen Endpunkten (d.h. IP-Adressen) ein ausgewählter Endpunkt kommuniziert und diese werden ebenfalls der Liste (d.h. der SOLL-LISTE) hinzugefügt. Optional kann diese Liste auch noch um die Informationen aus dem Domain Name System ergänzt werden, indem zum Beispiel per Befehl "dig" oder "nslookup" der DNS-Server ermittelt wird oder sogar der DNS-Cache des Endpunkts ausgelesen wird. Aus der Differenz der beiden Listen (d.h. der IST-Liste und der SOLL-Liste) erhält man eine neue Liste (eine sogenannte DELTA-Liste) aller noch nicht erfassten (inventarisierten) Schnittstellen von (bisher unbekannten) Endpunkten. Solange die DELTA-Liste noch Elemente enthält, muss das Netzwerk-Inventar als nicht vollständig angesehen werden.

Die Endpunkte, deren Interfaces in der DELTA-Liste aufgeführt werden, können nun im nächsten Schritt erfasst und in die Analyse aufgenommen werden, indem auch diese Endpunkte ihre Informationen zukünftig an die Zentralinstanz transferieren. Wiederholt man dann die oben dargestellten Arbeitsschritte zyklisch, so werden sukzessive alle Endpunkte des Netzwerks in das INVENTAR aufgenommen und die DELTA-Liste leert sich.

Grundsätzlich ist es technisch nicht ausgeschlossen, dass IP-Adressen (oder auch MAC-Adressen) in einem Computer-Netzwerk mehrfach vergeben werden. Dies kann unter Umständen zu Netzwerk-Problemen führen, die die Erreichbarkeit von Endpunkten negativ beeinträchtigt. Um solchen Problemen vorzubeugen, bietet es sich an, die IST-Liste regelmäßig daraufhin zu untersuchen, ob IP-Adressen oder MAC-Adressen mehrfach auftauchen und dabei Interfaces verschiedener Endpunkte zugeordnet sind. In einem solchen Fall sollte der entsprechende Listeneintrag zur späteren Analyse als Duplikat gekennzeichnet werden. Grundsätzlich können sowohl die Einträge der DELTA-Liste als auch die als Duplikate gekennzeichneten Einträge des INVENTARs zur Alarmierung genutzt werden und z.B. pro Interface-Eintrag in der Liste eine Meldung an ein Ticket-System generiert werden, aus welchem sich ein Workflow zur Bearbeitung der Auffälligkeiten ableiten kann.

Die im Folgenden vorgestellten Verfahren, Geräte und Systeme können zum automatischen Erstellen eines Inventars von Client-Server Systemen genutzt werden, d.h. von Computernetzwerken, die auf einer Client-Server Architektur basieren. Ein automatisches Inventarisieren bzw. Erstellen eines Inventars bezeichnet hierbei das automatisierte Erstellen einer Liste oder anderen Art von Aufstellung von Schnittstellen bzw. Interfaces der einzelnen Endpunkte, d.h. Clients und Server, des Computer-Netzwerks. Eine Schnittstelle eines Endpunkts lässt sich durch ihre Netzwerkadresse, z.B. IP-Adresse und ihre physikalische Adresse, z.B. MAC-Adresse beschreiben. Jeder Endpunkt kann eine oder mehrere solcher Schnittstellen aufweisen, welche die Kommunikation zu verschiedenen anderen Endpunkten des Computer-Netzwerks ermöglichen. Bei dem Computer-Netzwerk kann es sich z.B. um ein Unternehmensnetzwerk, d.h. um das sogenannte "Intranet" eines Unternehmens oder einer anderen administrativen Einheit handeln.

Die Client-Server-Architektur ist das Standardkonzept für die Verteilung von Aufgaben innerhalb eines Netzwerks. Aufgaben werden mittels Server auf verschiedene Rechner verteilt und können bei Bedarf von mehreren Clients zur Lösung ihrer eigenen Aufgaben oder Teilen davon angefordert werden. Bei den Aufgaben kann es sich um Standardaufgaben, wie beispielsweise E-Mail-Versand, E-Mail-Empfang, Web-Zugriff, etc. oder um spezifische Aufgaben einer Software oder eines Programms handeln. Eine Aufgabe wird im Client-Server-Modell als Dienst bezeichnet. Ein Server ist ein Programm, das einen Dienst (Service) anbietet. Im Rahmen des Client-Server-Konzepts kann ein anderes Programm, der Client, diesen Dienst nutzen. Die Kommunikation zwischen Client und Server ist abhängig vom Dienst, d.h. der Dienst bestimmt, welche Daten zwischen beiden ausgetauscht werden. Der Server ist in Bereitschaft, um jederzeit auf die Kontaktaufnahme eines Clients reagieren zu können. Im Unterschied zum Client, der aktiv einen Dienst anfordert, verhält sich der Server passiv und wartet auf Anforderungen. Die Regeln der Kommunikation für einen Dienst, wie beispielsweise Format, Aufruf des Servers und die Bedeutung der zwischen Server und Client ausgetauschten Daten werden durch ein für den jeweiligen Dienst spezifisches Protokoll festgelegt.

Die im Folgenden vorgestellten Computer-Netzwerke können auf drahtgebundenen Netzwerken basieren, beispielsweise unter Verwendung von Ethernet, USB, Kabel, etc. oder auf drahtlosen Netzwerken, beispielsweise unter Nutzung von WLAN, WiFi, Bluetooth, Infrarot oder anderen Nahbereichskommunikationsstandards oder auf Mobilfunknetzwerken, beispielsweise unter Nutzung von GSM, UMTS, LTE, 4G/5G, etc. Als Protokolle zur Daten- und/oder Sprachübertragung über das Computernetzwerk können beispielsweise IPv4 oder IPv6 genutzt werden.

Das Netzwerkinventarisierungssystem kann in der Cloud vorgesehen sein. Unter Cloud bzw. Cloud Computing ist hier der Ansatz zu verstehen, abstrahierte IT-Infrastrukturen wie beispielsweise Rechenkapazität, Datenspeicher, Netzwerkkapazitäten, fertige Software oder hier den Server dynamisch an den Bedarf angepasst über ein Netzwerk zur Verfügung zu stellen. Die zur Verfügung gestellte abstrahierte IT-Infrastruktur wird auch als Cloud bzw. "Wolke" bezeichnet.

Die im Folgenden vorgestellten Verfahren, Geräte und Systeme können von verschiedener Art sein. Die einzelnen beschriebenen Elemente können durch Hardware-oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Das hier vorgestellte Computernetzwerk ist ein Zusammenschluss verschiedener technischer, primär selbstständiger elektronischer Systeme, insbesondere Computer, d.h. Geräte, die mittels programmierbarer Rechenvorschriften Daten verarbeiten, aber auch Sensoren, Aktoren, Agenten und sonstiger funktechnischer Komponenten, etc., der die Kommunikation der einzelnen Systeme untereinander ermöglicht. Ziel ist hierbei z.B. die gemeinsame Nutzung von Ressourcen wie Netzwerkdruckern, Servern, Mediendateien und Datenbanken. Wichtig ist auch die Möglichkeit zur zentralen Verwaltung von Netzwerkgeräten, Netzwerkbenutzern, deren Berechtigungen und Daten. Besondere Bedeutung hat heute auch die direkte Kommunikation zwischen den Netzwerkbenutzern. Das Computernetzwerk kann eine Vielzahl von lokalen Netzwerken (LANs) umfassen, die beispielsweise über Router miteinander gekoppelt sind, d.h. Netzwerkgeräten, die Netzwerkpakete zwischen mehreren Rechnernetzen des Computernetzwerks weiterleiten können. Ferner können Gateways, Switches, Firewalls und andere Kommunikationskomponenten im Computernetzwerk implementiert sein. Als Endpunkte werden im folgenden alle Komponenten des Computernetzwerks bezeichnet, die über eine Netzwerkadresse (d.h. OSI-Schicht 3 Adresse, wie der IP-Adresse) und eine physikalische Adresse (d.h. OSI-Schicht 2 Adresse bzw. MAC-Adresse) verfügen.

Gemäß einem ersten Aspekt betrifft die Erfindung ein Netzwerkinventarisierungssystem nach Anspruch 1.

Mit einem solchen Netzwerkinventarisierungssystem lässt sich in automatisierter Weise ein Inventar eines Computer-Netzwerks erstellen, um z.B. dem Administrator eines Unternehmensnetzwerks einen Überblick über die einzelnen Endpunkte, d.h. Client- und Server-Computer seinem sich dynamisch ändernden Computer-Netzwerk zu verschaffen. Die oben beschriebenen Netzwerkinformationen liegen bereits auf den Netzwerkendpunkten vor, z.B. beim Initialisieren der Netzwerkendpunkte werden automatisch Systemprogramme wie z.B. "ifconfig", "arp" und/oder "netstat", etc. aufgerufen, welche dem Endpunkt die genannten Schnittstelleninformationen liefern. Diese Netzwerkinformationen brauchen nur noch an den Inventarisierungsserver weitergeleitet werden, um diesen in die Lage zu versetzen, eine Analyse des Computernetzwerks durchzuführen. Durch das sukzessive Ermitteln neuer Netzwerkendpunkte des Computernetzwerks kann schließlich ein Inventar des Computernetzwerks erstellt werden, welches dann automatisiert auf Vollständigkeit und Überschneidungsfreiheit überprüft werden kann. D.h. es kann festgestellt werden, ob alle Endpunkte, die sich laut Analyse im Netzwerk befinden müssen, bereits inventarisiert wurden oder ob es Endpunkte gibt, deren Eigenschaften doppelt im Netzwerk vorhanden sind. Anhand der Inventarliste können schließlich Unregelmäßigkeiten des Computernetzwerks erkannt werden, die beispielsweise durch bösartige Manipulationsversuche, Viren, Schadsoftware, etc. das Computernetzwerk beeinträchtigen.

In einer Implementierungsform des Netzwerkinventarisierungssystems ist der Inventarisierungsserver ausgebildet, die Netzwerkinformationen von den ihm bekannten Netzwerkendpunkten aktiv anzufordern oder passiv einzusammeln.

Ein aktives Anfordern bietet den Vorteil, dass der Inventarisierungsserver die Kontrolle über Ablauf und Dauer des Inventarisierungsverfahrens hat, da erden Zeitpunkt bestimmen kann, zu dem er neue Daten über die Netzwerkendpunkte einsammeln will. Ein passives Einsammeln bietet den Vorteil, dass der Inventarisierungsserver im Netzwerk unbekannt bleibt und mögliche Angreifer keine Hinweise über das Vorhandensein des Inventarisierungsserver erhalten, beispielsweise durch im Netzwerk übermittelte Anforderungsnachrichten mit der Quelladresse des Inventarisierungsservers. Der Inventarisierungsserver kann gleichzeitig ein Angrifferkennungs- und abwehrsystem umfassen, um Angriffe auf das Computernetzwerk zu erkennen und/oder das Einschleusen bösartiger Software abzuwehren.

In einer Implementierungsform des Netzwerkinventarisierungssystems sind die Netzwerkendpunkte ausgebildet, die Netzwerkinformationen einmalig oder zyklisch zu erfassen und dem Inventarisierungsserver bereitzustellen.

Ein einmaliges Erfassen bietet den Vorteil, dass das Erfassen beim Initialisieren des Netzwerkendpunkts, z.B. beim Bootvorgang ausgeführt werden kann, und damit ohne zusätzlichen Aufwand implementiert werden kann. Ein zyklisches Erfassen bietet den Vorteil, dass jeweils die neueste Konfiguration des Computernetzwerks damit erfasst wird und das Inventar auf dem aktuellen Stand gehalten werden kann. Beispielsweise kann dies einmal pro Tag vorkommen, indem z.B. in der Nacht ein solches zyklisches Erfassen von Netzwerkinformationen vorgenommen wird.

In einer Implementierungsform des Netzwerkinventarisierungssystems sind die Netzwerkendpunkte ausgebildet: die Schnittstellen der weiteren Netzwerkendpunkte, die sich in lokaler Netzwerkumgebung der Netzwerkendpunkte befinden, über ein ISO-Schicht 2 Protokoll zu bestimmen, und die Netzwerkadressen von erreichbaren Schnittstellen weiterer Netzwerkendpunkte, die sich außerhalb ihrer lokalen Netzwerkumgebung befinden, über ein ISO-Schicht 3 Protokoll zu bestimmen.

Diese beiden ISO Protokolle, die genutzt werden können, um IP Adressen (Schicht 3) und MAC Adressen (Schicht 2) zu bestimmen, sind standardisiert und können auf den Endpunkten automatisiert ausgeführt werden, so dass die benötigten Netzwerkinformationen auf den Endpunkten vorliegen und vom Inventarisierungsserver nur noch eingesammelt oder abgerufen werden müssen. Damit ist eine einfache und effiziente Realisierung eines Netzwerkinventarisierungssystems möglich.

In einer Implementierungsform des Netzwerkinventarisierungssystems sind die Netzwerkendpunkte ausgebildet: die Netzwerkadresse und physikalische Adresse ihrer zumindest einen Schnittstelle über einen "ifconfig", "ipconfig", "ip" oder gleichwertigen Befehl zu ermitteln, die Schnittstellen der weiteren Netzwerkendpunkte, die sich in lokaler Netzwerkumgebung der Netzwerkendpunkte befinden, über einen "arp" oder gleichwertigen Befehl zu ermitteln, und die Netzwerkadressen von erreichbaren Schnittstellen weiterer Netzwerkendpunkte, die sich außerhalb ihrer lokalen Netzwerkumgebung befinden, über einen "netstat" oder gleichwertigen Befehl zu ermitteln.

Dies bietet den Vorteil, dass diese Befehle bereits im Betriebssystem vorhanden sind und ohne zusätzlichen Aufwand ausgeführt werden können.

In einer Implementierungsform des Netzwerkinventarisierungssystems ist der Inventarisierungsserver ferner ausgebildet, von den ihm bekannten Netzwerkendpunkten die Routing-Einstellungen und/oder Informationen zum DNS-Dienst zu empfangen und darauf basierend weitere Netzwerkendpunkte zu ermitteln.

Dies bietet den Vorteil, dass Namensserver und Router über vielfältige weitere Informationen von Schnittstellen verfügen, die so in die Analyse mit aufgenommen werden können, um die Genauigkeit der Inventarisierung zu steigern.

In einer Implementierungsform des Netzwerkinventarisierungssystems ist der Inventarisierungsserver ausgebildet: basierend auf den empfangenen Netzwerkinformationen über die bekannten Netzwerkendpunkte eine IST-Liste mit Schnittstellen bekannter Netzwerkendpunkte zu erstellen, basierend auf den empfangenen Netzwerkinformationen über die weiteren Netzwerkendpunkte eine SOLL-Liste mit Schnittstellen von erfassten Netzwerkendpunkten zu erstellen, und basierend auf einer Abweichung der IST-Liste von der SOLL-Liste eine DELTA-Liste mit Schnittstellen neuer Netzwerkendpunkte zu erstellen.

Dies bietet den Vorteil, dass anhand der genannten Listen eine einfache Auswertung der Informationen ermöglicht wird. Die Bestimmung der Abweichung von IST-Liste zu SOLL-Liste kann automatisiert durch einfache Programme ausgeführt werden.

In einer Implementierungsform des Netzwerkinventarisierungssystems ist der Inventarisierungsserver ausgebildet, sukzessive von den neuen Netzwerkendpunkten der DELTA-Liste Netzwerkinformationen zu empfangen bis die DELTA-Liste leer ist oder gegen eine Anzahl von Schnittstellen neuer Netzwerkendpunkte konvergiert.

Dies bietet den Vorteil, dass der Inventarisierungsserver mit jedem Iterationsschritt eine genauere Spezifikation des Inventars des Computernetzwerks erhält. Wenn die DELTA-Liste leer ist oder gegen einen bestimmten Wert konvergiert, kann das Inventar als vollständig betrachtet werden. Die kann ebenfalls durch Programme automatisch erkannt werden.

In einer Implementierungsform des Netzwerkinventarisierungssystems ist der Inventarisierungsserver ausgebildet, basierend auf der IST-Liste ein Inventar des Computernetzwerks zu erstellen.

Dies bietet den Vorteil, dass das Inventar sukzessive von bekannten Endpunkten auf momentan noch unbekannte Endpunkte ausgedehnt wird, die erst in einem Folgeschritt dem Inventarisierungsserver bekannt gemacht werden. Die Inventarliste lässt sich somit Zug um Zug erstellen und wird mit jeder Iteration genauer ohne dass in einem einzelnen Schritt eine große Rechenleistung zur Verfügung gestellt werden muss.

In einer Implementierungsform des Netzwerkinventarisierungssystems ist der Inventarisierungsserver ausgebildet, das Inventar des Computernetzwerks basierend auf einem Abgleich der IST-Liste mit einer weißen Liste (Whitelist) und/oder einer schwarzen Liste (Blacklist) zu erstellen.

Dies bietet den Vorteil, dass die Erstellung des Inventars auf ein bestimmtes Netzwerk, z.B. Unternehmensnetzwerk, begrenzt werden kann, das sich beispielsweise durch einen bestimmten Bereich von dem Operator bekannten konfigurierten IP-Adressen spezifizieren lässt. Damit werden in das Inventar nur die Endpunkte des Unternehmensnetzes bzw. Intranets aufgenommen, nicht aber andere ermittelte Endpunkte, die sich außerhalb des Intranets im Internet befinden.

In einer Implementierungsform des Netzwerkinventarisierungssystems umfasst die Whitelist Netzwerkadressen, die in einen vorgegebenen Bereich von Netzwerkadressen fallen, und umfasst die Blacklist Netzwerkadressen, die außerhalb eines vorgegebenen Bereichs von Netzwerkadressen liegen und/oder frei konfigurierbar sind.

Dies bietet den Vorteil, dass sich die Eigenschaft, ob es sich um eine Netzwerkadresse des Intranets handelt oder um eine außerhalb des Intranets leicht überprüft werden kann. Beispielsweise kann eine Überprüfung anhand ihrer IP-Adresse erfolgen, entweder durch Vergleich mit einer Whitelist erlaubter IP-Adressen (innerhalb des Intranets) oder mit einer Blacklist nicht erlaubter IP-Adressen (außerhalb des Intranets). Ferner können bereits erkannte Bedrohungen in die Blacklist aufgenommen werden.

In einer Implementierungsform des Netzwerkinventarisierungssystems ist der Inventarisierungsserver ausgebildet, die IST-Liste und/oder die DELTA-Liste auf gleiche Netzwerkadressen und/oder gleiche physikalische Adressen von verschiedenen Schnittstellen zu überprüfen und als Duplikat zu markieren.

Dies bietet den Vorteil, dass leicht Unregelmäßigkeiten des Computernetzwerks erkannt werden können. Eine physikalische Adresse sollte weltweit einmalig sein und eine IP-Adresse sollte bei entsprechend konfiguriertem Computernetzwerk ebenfalls nur einmalig auftreten. Treten hier zwei gleiche MAC-Adressen oder IP-Adressen auf, so kann dies ein Anzeichen sein für einen Fehler im Computernetzwerk oder es kann auf das Vorhandensein eines Angriffs auf das Computernetzwerk hindeuten, der von einem Endpunkt mit vorgetäuschter IP-Adresse oder MAC-Adresse erfolgt. Doppelte IP-Adressen müssen jedoch nicht zwangsläufig ein Fehler sein, sollten als Risiko aber trotzdem gekennzeichnet und/oder vermieden werden. In großen Unternehmensnetzwerken werden häufig IP-Adressen nach RFC1918 verwendet. Da dieser Adressbereich in großen gewachsenen oder fusionierten Netzen zu klein sein kann, kann es hier schon einmal zu Dopplungen kommen, die dann zu Fehlern führen können.

In einer Implementierungsform des Netzwerkinventarisierungssystems ist der Inventarisierungsserver ausgebildet, basierend auf den Schnittstellen der DELTA-Liste und/oder den Duplikatmarkierungen einen Alarm auszulösen und/oder die Schnittstellen der DELTA-Liste und/oder die Duplikatmarkierungen an ein Auswertungssystem weiterzuleiten.

Dies bietet den Vorteil, dass Unregelmäßigkeiten, die beispielsweise durch Fehler im System auftreten oder insbesondere von Angriffen auf das Computernetzwerk mit Schadsoftware ausgehen, effizient erkannt und abgewehrt werden können.

Gemäß einem zweiten Aspekt betrifft die Erfindung ein Verfahren nach Anspruch 12.

Mit einem solchen Verfahren lässt sich in automatisierter Weise ein Inventar eines Computer-Netzwerks erstellen, um z.B. einem Administrator eines Unternehmensnetzwerks einen Überblick über die einzelnen Endpunkte, d.h. Client- und Server-Computer in seinem sich dynamisch ändernden Computer-Netzwerk zu verschaffen, wie bereits oben zum ersten Aspekt beschrieben. Anhand des Aufstellens des Inventars kann der Administrator Unregelmäßigkeiten des Computernetzwerks erkennen, die beispielsweise durch bösartige Manipulationsversuche, Viren, Schadsoftware, etc. das Computernetzwerk beeinträchtigen.

Gemäß einem dritten Aspekt betrifft die Erfindung einen Inventarisierungsserver nach Anspruch 13.

Mit einem solchen Inventarisierungsserver lässt sich in automatisierter Weise ein Inventar eines Computer-Netzwerks erstellen, um z.B. einem Administrator eines Unternehmensnetzwerks einen Überblick über die einzelnen Endpunkte, d.h. Client- und Server-Computer in seinem sich dynamisch ändernden Computer-Netzwerk zu verschaffen, wie bereits oben zum ersten Aspekt beschrieben. Der Inventarisierungsserver bietet dem Netzwerkadministrator die Möglichkeit, Unregelmäßigkeiten des Computernetzwerks zu erkennen, die beispielsweise durch bösartige Manipulationsversuche, Viren, Schadsoftware, etc. das Computernetzwerk beeinträchtigen.

Weitere Ausführungsbeispiele werden Bezug nehmend auf die beiliegenden Zeichnungen erläutert. Es zeigen:
Fig. 1 eine schematische Darstellung eines Netzwerkinventarisierungssystems 100 mit einem Computernetzwerk 101 mit einer Mehrzahl von Computern, welche Netzwerkendpunkte 110, 120, 130 in dem Computernetzwerk 101 bilden, und einem Inventarisierungsserver 160 zum Inventarisieren des Computernetzwerks 101 gemäß einer Ausführungsform;
Fig. 2 eine schematische Darstellung 200 eines Netzwerkendpunkts 110 mit mehreren Schnittstellen 111, 112, 213, denen jeweils eine Netzwerkadresse und eine physikalische Adresse zugeordnet ist, gemäß einer Ausführungsform;
Fig. 3 eine schematische Darstellung 300 einer Mehrzahl von Netzwerkendpunkten 110, 120, 330 in einem lokalen Subnetzwerk 103, die über Schnittstellen 111, 121, 331 mit jeweiliger Netzwerkadresse und physikalischer Adresse mit dem lokalen Subnetzwerk 103 verbunden sind, gemäß einer Ausführungsform;
Fig. 4 eine schematische Darstellung 400 einer Mehrzahl von Netzwerkendpunkten 110, 420, 130, die über ein Weitverkehrsnetz 401 miteinander kommunizieren, und über Schnittstellen 111, 421, 131 mit jeweiliger Netzwerkadresse und physikalischer Adresse verfügen, gemäß einer Ausführungsform;
Fig. 5 eine schematische Darstellung eines Computernetzwerks 500 bestehend aus Intranet 540 und Internet 530, die über einen Router 520 miteinander gekoppelt sind, gemäß einer Ausführungsform;
Fig. 6 eine schematische Darstellung eines Verfahrens 600 zum Inventarisieren eines Computernetzwerks gemäß einer Ausführungsform; und
Fig. 7 ein Blockdiagramm eines Inventarisierungsservers 160 gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

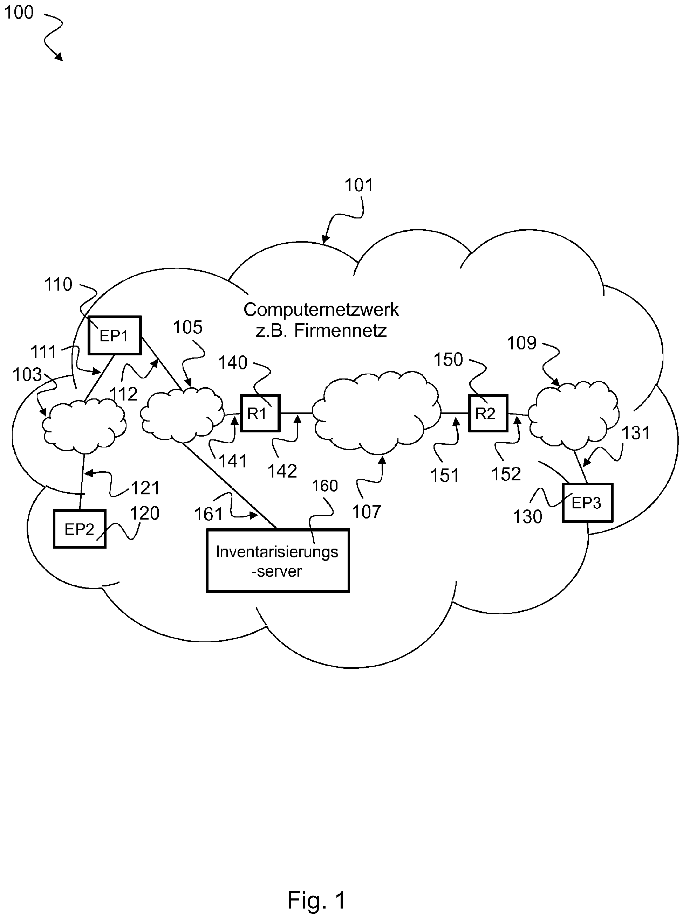

Fig. 1 zeigt eine schematische Darstellung eines Netzwerkinventarisierungssystems 100 mit einem Computernetzwerk 101 mit einer Mehrzahl von Computern, welche Netzwerkendpunkte 110, 120, 130 in dem Computernetzwerk 101 bilden, und einem Inventarisierungsserver 160 zum Inventarisieren des Computernetzwerks 101 gemäß einer Ausführungsform.

Das Netzwerkinventarisierungssystem 100 umfasst ein Computernetzwerk 101 und einen Inventarisierungsserver 160, der in oder außerhalb des Computernetzwerks 101 angeordnet sein kann. Das Computernetzwerk 101 umfasst eine Mehrzahl von Computern, welche Netzwerkendpunkte 110, 120, 130 in dem Computernetzwerk 101 bilden. Ein Netzwerkendpunkt oder vereinfacht gesprochen Endpunkt in dem Netzwerk 101 ist ein Computer mit einer Schnittstelle, die es dem Endpunkt ermöglicht, sich mit anderen Computern des Netzwerks oder Computern außerhalb des Netzwerks kommunikativ zu vernetzen. Dazu umfasst die Schnittstelle eine Netzwerkadresse, z.B. eine IP Adresse, und eine physikalische Adresse bzw. Hardwareadresse oder MAC-Adresse. Jeder Endpunkt kann eine oder mehrere Schnittstellen bzw. Interfaces umfassen, um mehrere Kommunikationsverbindungen zu verschiedenen oder auch gleichen anderen Endpunkten aufzubauen.

Das Computernetzwerk 101 kann mehrere Subnetze umfassen, z.B. lokale Subnetze wie beispielsweise die Netze 103, 105 oder 109, und/oder Weitverkehrsnetze, wie z.B. das WAN 107. An die einzelnen Subnetze können Endpunkte angeschlossen sein, beispielsweise der Endpunkt EP1, 110 an die beiden Subnetze 103 und 105, der Endpunkt EP2, 120 an das Subnetz 103 und der Endpunkt EP3, 130 an das Subnetz 109. Um den Übergang von einem lokalen Subnetz in ein Weitverkehrsnetz zu ermöglichen, können an den Netzschnittstellen Router angeordnet sein, welche aus den ermittelten Netzinformationen der beiden Netze geeignete Routen bestimmen, um ein Datenpaket weiterzuleiten. In dem Beispiel der Figur 1 ist ein erster Router R1, 140 zwischen dem Subnetz 105 und dem WAN 107 angeordnet und ein zweiter Router R2, 150 zwischen dem WAN 107 und dem Subnetz 109. Das Computernetzwerk 100 kann beispielsweise ein Firmennetz bzw. Unternehmensnetz sein, das über mehrere Standorte verteilt ist, welche über ein Weitverkehrsnetz 107 gekoppelt sind.

Somit zeigt Figur 1 ein Netzwerkinventarisierungssystem 100, mit einer Mehrzahl von Computern, welche Netzwerkendpunkte 110, 120, 130 in einem Computernetzwerk 101 bilden, wobei jeder Netzwerkendpunkt 110, 120, 130 zumindest eine Schnittstelle 111, 112 zu dem Computernetzwerk 101 umfasst, welcher eine Netzwerkadresse und eine physikalische Adresse zugeordnet ist. Das Netzwerkinventarisierungssystem 100 umfasst ferner einen Inventarisierungsserver 160 zur Inventarisierung des Computernetzwerks 101, wobei dem Inventarisierungsserver 160 eine initiale Anzahl von Netzwerkendpunkten, z.B. der Endpunkt 110, des Computernetzwerks 101 bekannt sind. Der Inventarisierungsserver 160 ist dafür ausgelegt, von den ihm bekannten Netzwerkendpunkten 110 die folgenden Netzwerkinformationen zu empfangen: die jeweilige Netzwerkadresse und physikalische Adresse der zumindest einen Schnittstelle 111, 112 der bekannten Netzwerkendpunkte 110, Schnittstellen 121 mit zugehöriger Netzwerkadresse und physikalischer Adresse weiterer Netzwerkendpunkte, z.B. des Endpunkts 120, die sich in einer lokalen Netzwerkumgebung 103 der bekannten Netzwerkendpunkte 110 befinden, Netzwerkadressen von für die bekannten Netzwerkendpunkte 110 erreichbaren Schnittstellen, z.B. der Schnittstelle 131 weiterer Netzwerkendpunkte 130, die sich außerhalb der lokalen Netzwerkumgebung 103 der bekannten Netzwerkendpunkte 110 befinden. Der Inventarisierungsserver 160 ist dafür ausgelegt, basierend auf den empfangenen Netzwerkinformationen neue Netzwerkendpunkte, z.B. die Endpunkte 120, 130 zu ermitteln, die sich nicht unter den bekannten Netzwerkendpunkten 110 befinden, die neu ermittelten Netzwerkendpunkte 120, 130 den bekannten Netzwerkendpunkten 110 hinzuzufügen und sukzessive weitere neue Netzwerkendpunkte des Computernetzwerks 101 zu ermitteln.

Der Inventarisierungsserver 160 kann die Netzwerkinformationen von den ihm bekannten Netzwerkendpunkten 110 aktiv anfordern oder passiv einsammeln. Die Netzwerkendpunkte 110, 120, 130 können die Netzwerkinformationen einmalig oder zyklisch erfassen und dem Inventarisierungsserver 160 bereitstellen.

Die Netzwerkendpunkte 110, 120, 130 können die Schnittstellen 121 der weiteren Netzwerkendpunkte 120, 330, die sich in lokaler Netzwerkumgebung 103 der Netzwerkendpunkte 110 befinden, z.B. über ein ISO-Schicht 2 Protokoll bestimmen, und die Netzwerkadressen von erreichbaren Schnittstellen 131 weiterer Netzwerkendpunkte 130, die sich außerhalb ihrer lokalen Netzwerkumgebung 103 befinden, z.B. über ein ISO-Schicht 3 Protokoll bestimmen.

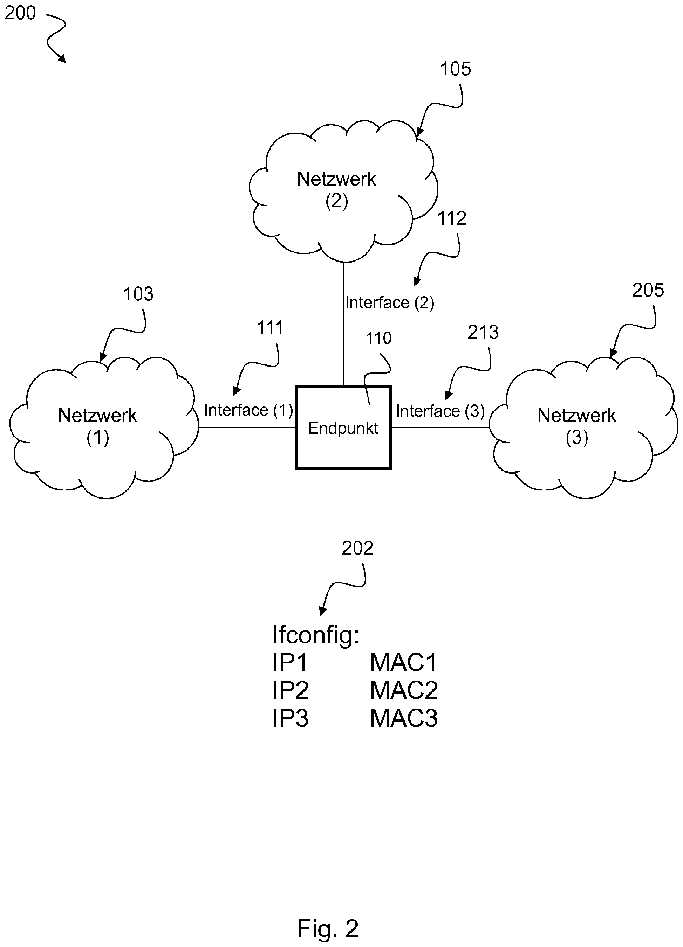

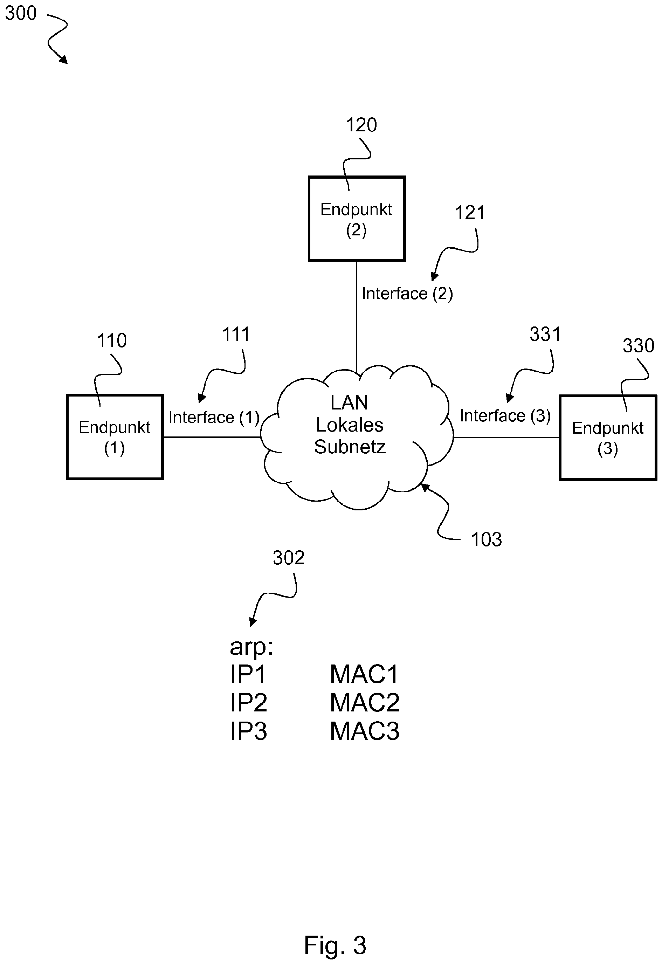

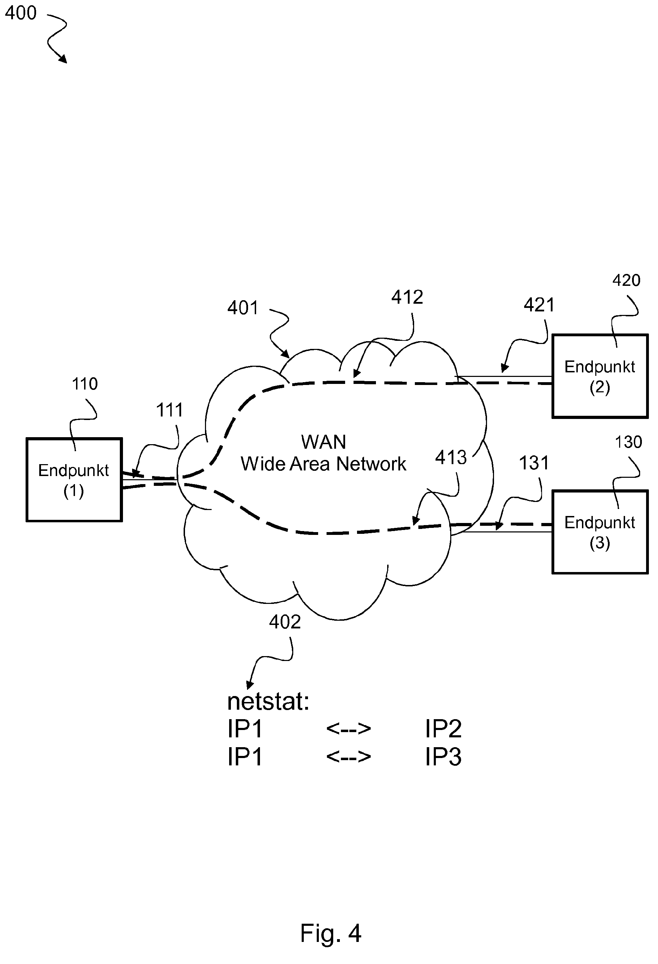

Die Netzwerkendpunkte 110 können die Netzwerkadresse und die physikalische Adresse ihrer zumindest einen Schnittstelle 111, 112 beispielsweise über einen "ifconfig" 202, "ipconfig", "ip" oder gleichwertigen Befehl ermitteln, z.B. wie unten zu Figur 2 näher beschrieben. Die Netzwerkendpunkte 110 können die Schnittstellen 121 der weiteren Netzwerkendpunkte 120, die sich in lokaler Netzwerkumgebung 103 der Netzwerkendpunkte 110 befinden, z.B. über einen "arp" 302 oder gleichwertigen Befehl ermitteln, z.B. wie unten zu Figur 3 näher beschrieben. Die Netzwerkendpunkte 110 können die Netzwerkadressen von erreichbaren Schnittstellen 131 weiterer Netzwerkendpunkte 130, die sich außerhalb ihrer lokalen Netzwerkumgebung 103 befinden, z.B. über einen "netstat" 402 oder gleichwertigen Befehl ermitteln, z.B. wie unten zu Figur 4 näher beschrieben.

Der Inventarisierungsserver 160 kann ferner von den ihm bekannten Netzwerkendpunkten 110 die Routing-Einstellungen und/oder Informationen zum DNS (Domain Name System)-Dienst empfangen und darauf basierend weitere Netzwerkendpunkte ermitteln.

Der Inventarisierungsserver 160 kann beispielsweise basierend auf den empfangenen Netzwerkinformationen über die bekannten Netzwerkendpunkte 110 eine IST-Liste mit Schnittstellen 111, 112 bekannter Netzwerkendpunkte 110 erstellen, beispielsweise wie unten zu Figur 2 näher beschrieben. Der Inventarisierungsserver 160 kann beispielsweise basierend auf den empfangenen Netzwerkinformationen über die weiteren Netzwerkendpunkte 120, 130 eine SOLL-Liste mit Schnittstellen 111, 112, 121, 131 von erfassten Netzwerkendpunkten 110, 120, 130 erstellen. Der Inventarisierungsserver 160 kann beispielsweise basierend auf einer Abweichung der IST-Liste von der SOLL-Liste eine DELTA-Liste mit Schnittstellen 121, 131 neuer Netzwerkendpunkte 120, 130 erstellen.

Der Inventarisierungsserver 160 kann dabei sukzessive von den neuen Netzwerkendpunkten 120, 130 der DELTA-Liste Netzwerkinformationen empfangen bis die DELTA-Liste leer ist oder gegen eine Anzahl von Schnittstellen neuer Netzwerkendpunkte konvergiert.

Der Inventarisierungsserver 160 kann basierend auf der IST-Liste ein Inventar des Computernetzwerks 101 zu erstellen, d.h. alle Schnittstellen von Endpunkten des Computernetzwerks aufzeichnen und dokumentieren, z.B. in einer elektronisch gespeicherten Inventarliste.

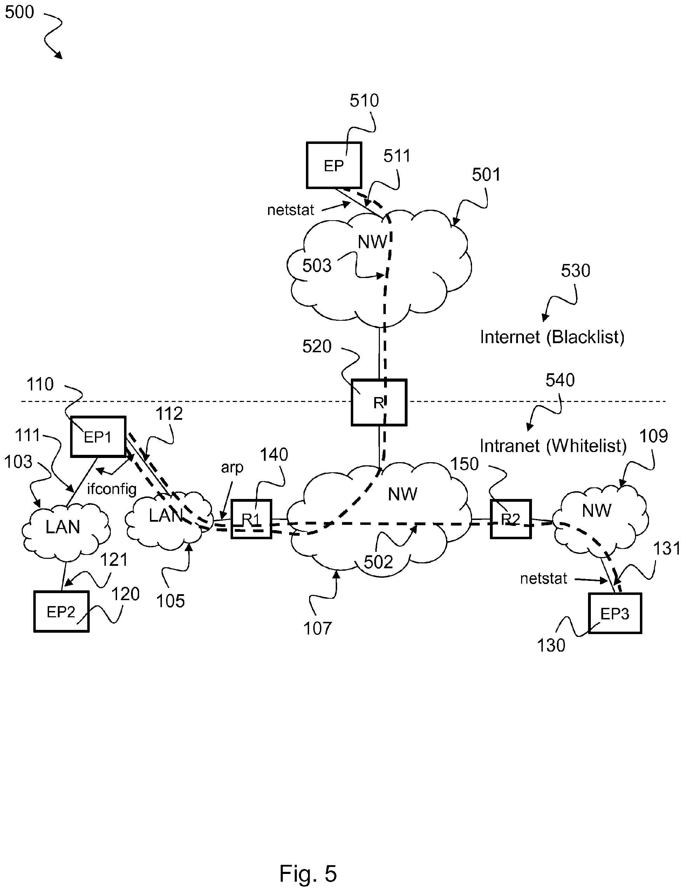

Der Inventarisierungsserver 160 kann beispielsweise das Inventar des Computernetzwerks 101 basierend auf einem Abgleich der IST-Liste mit einer weißen Liste (Whitelist) 540 und/oder einer schwarzen Liste (Blacklist) 530 erstellen, z.B. wie näher unten zu Figur 5 beschrieben. Dabei kann die Whitelist 540 Netzwerkadressen umfassen, die in einen vorgegebenen Bereich von Netzwerkadressen fallen, z.B. für das Intranet bzw. Unternehmensnetz vom Betreiber zugewiesenen IP-Adressen. Die Blacklist 530 kann Netzwerkadressen umfassen, die außerhalb eines vorgegebenen Bereichs von Netzwerkadressen liegen, z.B. außerhalb des Bereichs vom Betreiber zugewiesener IP-Adressen und/oder frei konfigurierbar sind, z.B. bei Erkennung eines Angriffs ausgehend von einer IP-Adresse, kann diese IP-Adresse in die schwarze Liste eingetragen werden.

Der Inventarisierungsserver 160 kann die IST-Liste und/oder die DELTA-Liste auf gleiche Netzwerkadressen und/oder gleiche physikalische Adressen von verschiedenen Schnittstellen hin überprüfen und solche als gleich erkannte Netzwerkadressen oder physikalische Adressen als Duplikat markieren.

Der Inventarisierungsserver 160 kann ferner basierend auf den Schnittstellen 121, 131 der DELTA-Liste und/oder den Duplikatmarkierungen einen Alarm auszulösen und/oder die Schnittstellen 121, 131 der DELTA-Liste und/oder die Duplikatmarkierungen an ein Auswertungssystem weiterzuleiten. Der Alarm kann entweder sofort ausgelöst werden sobald ein Listeneintrag der DELTA-Liste oder eine Duplikatmarkierung vorliegt. Alternativ können die ermittelten Daten der DELTA-Liste an einen Scanner weitergeleitet werden, z.B. einen Netzwerkscanner wie oben beschrieben, um die DELTA-Liste weiter zu analysieren und einen Netzwerkscan basierend auf der DELTA Liste durchzuführen und beim Erkennen von Unregelmäßigkeiten einen Alarm auszulösen.

Fig. 2 zeigt eine schematische Darstellung eines Netzwerkendpunkts 110 mit mehreren Schnittstellen 111, 112, 213, denen jeweils eine Netzwerkadresse und eine physikalische Adresse zugeordnet sind, gemäß einer Ausführungsform.

Der hier dargestellte Endpunkt 110 entspricht einem Endpunkt des in Figur 1 dargestellten Computernetzwerks 100, z.B. dem ersten Endpunkt EP1, 110 mit der Schnittstelle 111 zum Netzwerk 103 und der Schnittstelle 112 zum Netzwerk 105. Ferner umfasst der in Fig. 2 dargestellte Endpunkt 110 noch eine weitere Schnittstelle 213 zum Netzwerk 205, die in Figur 1 nicht dargestellt ist.

Ein Endpunkt in einem Computer-Netzwerk besitzt immer mindestens ein Netzwerk-Interface, kann im Prinzip aber auch über beliebig viele Interfaces verfügen. Mit einem Befehl wie "ifconfig" 202 ermittelt man die Konfiguration aller Schnittstellen, die ein Endpunkt besitzt. Über die IP- und die MAC-Adresse ist ein Interface eindeutig definiert.

Für den Endpunkt 110 lässt sich beispielsweise die folgende Schnittstellenliste aufstellen: IP1 und MAC1 für das erste Interface 111, IP2 und MAC2 für das zweite Interface 112 und IP3 und MAC3 für das dritte Interface 213.

Das Kommandozeilenprogramm "ifconfig" (unter Unix) dient zur Konfiguration und Steuerung von IP-Netzwerkschnittstellen. Üblicherweise wird das Programm zur Einrichtung einer Netzwerkschnittstelle eingesetzt, um damit die IP-Adresse und die Netzmaske zu setzen, die Schnittstelle zu aktivieren oder zu deaktivieren. Es kann auch zum Anzeigen des Zustands der momentan konfigurierten Netzwerkschnittstellen verwendet werden. Während des Boot-Vorgangs benutzen viele Unix-Systeme Shell-Skripte, die *"ifconfig"* aufrufen, um damit die Netzwerkadapter zu konfigurieren.

Ifconfig wird benutzt, um kernel-residente Netzwerksschnittstellen zu konfigurieren. Es wird zur Systemstartzeit verwendet, um die Schnittstellen nach Notwendigkeit zu initialisieren. Danach wird es üblicherweise zur Fehlersuche oder zur Verfeinerung der Systemkonfiguration verwendet. Wenn keine Argumente angegeben werden, dann zeigt ifconfig den Zustand der momentan aktiven Netzwerksschnittstellen. Wird ein einzelnes Schnittstellenargument angegeben, so zeigt es nur den Zustand der angegebenen Netzwerksschnittstelle an. Wird eine einzelne -a Option angegeben, zeigt es den Zustand aller Schnittstellen an, selbst wenn diese inaktiviert sind. Ansonsten konfiguriert ifconfig eine Schnittstelle.

Fig. 3 zeigt eine schematische Darstellung einer Mehrzahl von Netzwerkendpunkten 110, 120, 330 in einem lokalen Subnetzwerk 103, die über Schnittstellen 111, 121, 331 mit jeweiliger Netzwerkadresse und physikalischer Adresse mit dem lokalen Subnetzwerk 103 verbunden sind, gemäß einer Ausführungsform.

Das hier dargestellte Subnetzwerk entspricht einem der in Figur 1 dargestellten Subnetzwerke, z.B. dem Subnetzwerk 103 mit den beiden Endpunkten 110 und 120 mit jeweiligen Schnittstellen 111 und 121. Das Subnetzwerk 103 aus Figur 3 zeigt einen weiteren Endpunkt 330 mit dem Interface 331, der in Figur 1 nicht dargestellt ist.

Über den Befehl "arp" 302 bzw. das damit genutzte "Address Resolution Protocol" (ARP) kann ein Endpunkt alle anderen Endpunkte bestimmen, die sich in seinem lokalen Subnetz befinden, also über den Layer 2 (OSI-ModeII, https://de.wikipedia.org/wiki/OSI-Modell) erreichbar sind.

Für den Endpunkt 110 lässt sich beispielsweise die folgende Schnittstellenliste aufstellen: IP1 und MAC1 für das erste Interface 111, IP2 und MAC2 für das zweite Interface 121 und IP3 und MAC3 für das dritte Interface 331 im lokalen Subnetz 103. Die gleiche Schnittstellenliste lässt sich erstellen, wenn "arp" auf dem Endpunkt 120 oder dem Endpunkt 330 aufgerufen wird.

Das "Address Resolution Protocol" (ARP) ist ein Netzwerkprotokoll, das zu einer Netzwerkadresse der Internetschicht, z.B. einer IP-Adresse, die physikalische Adresse (Hardwareadresse bzw. MAC-Adresse) der Netzzugangsschicht ermittelt und diese Zuordnung gegebenenfalls in den so genannten ARP-Tabellen der beteiligten Rechner hinterlegt. Es wird meist im Zusammenhang mit IPv4-Adressierung auf Ethernet-Netzen, also zur Ermittlung von MAC-Adressen zu gegebenen IP-Adressen verwendet. Für IPv6 wird diese Funktionalität nicht von ARP, sondern durch das "Neighbor Discovery Protocol" (NDP) bereitgestellt.

Mit dem Befehl "arp" wird eine ARP-Anforderung (*ARP Request*) mit der MAC-Adresse und der IP-Adresse des anfragenden Computers als Senderadresse und der IP-Adresse des gesuchten Computers als Empfänger-IP-Adresse an alle Computer des lokalen Netzwerkes gesendet. Als Empfänger-MAC-Adresse wird dazu die Broadcast-Adresse "ff-ff-ff-ff-ff-ff" verwendet. Empfängt ein Computer ein solches Paket, sieht er nach, ob dieses Paket seine IP-Adresse als Empfänger-IP-Adresse enthält. Wenn dies der Fall ist, antwortet er mit dem Zurücksenden seiner MAC-Adresse und IP-Adresse (ARP-Antwort oder *ARP-Reply*) an die MAC-Quelladresse des Anforderers. Dieser trägt nach Empfang der Antwort die empfangene Kombination von IP- und MAC-Adresse in seine ARP-Tabelle, den sogenannten ARP-Cache, ein. Für ARP-Request und ARP-Reply wird das gleiche Paket-Format verwendet. Unter Unix und Windows kann der ARP-Cache mit "arp" beziehungsweise "arp -a" angezeigt und mit dem entsprechenden Programm auch manipuliert werden.

Das ARP ist für die Auflösung der MAC-Adressen im lokalen Netzwerk zuständig. Sollen Daten über Netzwerkgrenzen hinweg gesendet werden, wird das Internet Protokoll (IP) verwendet. IP-Implementierungen sind in der Lage, zu erkennen, dass ein Paket nicht für das lokale Subnetz bestimmt ist und senden es an einen lokalen Router, z.B. einen Router 140, 150 wie in Figur 1 dargestellt, der sich um die Weiterleitung des Pakets kümmert. Dieser Router hat wiederum eine lokale MAC-Adresse, die über ARP ermittelt werden kann.

Fig. 4 zeigt eine schematische Darstellung einer Mehrzahl von Netzwerkendpunkten 110, 420, 130, die über ein Weitverkehrsnetz (WAN) 401 miteinander kommunizieren, und über Schnittstellen 111, 421, 131 mit jeweiliger Netzwerkadresse und physikalischer Adresse verfügen, gemäß einer Ausführungsform.

Das hier dargestellte WAN kann beispielsweise dem in Figur 1 dargestellten Netzwerk 107 entsprechen, über das die verschiedenen Subnetzwerke 103, 105 und 109 des Computernetzwerks 100 miteinander gekoppelt sind. Das WAN kann als Koppelpunkt zum Subnetzwerk 103, 105 einen ersten Router R1, 140 umfassen und als Koppelpunkt zum Subnetzwerk 109 einen zweiten Router R2, 150. Der Netzwerkendpunkt 110 kann dem in Figur 1 dargestellten Netzwerkendpunkt 110 im ersten Subnetz 103, 105 entsprechen und der Netzwerkendpunkt 130 kann dem in Figur 1 dargestellten Netzwerkendpunkt 130 im zweiten Subnetz 109 entsprechen. Über das WAN 401 kann ferner ein weiterer Endpunkt 420 mit Schnittstelle 421 erreicht werden, der in Fig. 1 nicht dargestellt ist. Über das WAN 401 lässt sich eine erste Kommunikationsverbindung 412 zwischen erstem Endpunkt 110 und zweitem Endpunkt 420 aufbauen. Über das WAN 401 lässt sich ferner eine zweite Kommunikationsverbindung 413 zwischen erstem Endpunkt 110 und drittem Endpunkt 130 aufbauen.

Über den Befehl "netstat" lassen sich alle Kommunikationsbeziehungen ermitteln, die ein Endpunkt gerade zu anderen Endpunkten besitzt. Hiermit werden auch Endpunkte ermittelt, die sich nicht im lokalen Subnetz befinden, sondern nur über ein Wide Area Network (WAN) erreicht werden können.

Mittels "netstat" lässt sich beispielsweise die folgende Netzwerkadressliste aufstellen: IP1 von erstem Endpunkt 110 steht in Kommunikation mit IP2 von zweitem Endpunkt 420; und IP1 von erstem Endpunkt 110 steht in Kommunikation mit IP3 von drittem Endpunkt 130.

Die Befehle "ifconfig", "arp" und "netstat" sind stellvertretend für alle Befehle, die zu ähnlichen Informationen auf anderen Betriebssystemen führen können (z.B. "ip", "ipconfig", "ss", etc.) Es geht immer darum 1) die eigenen Netzwerk-Daten zu bestimmen, 2) die direkte (lokale) Netzwerkumgebung zu erkunden (über ISO-Layer 2, Ethernet-Layer); und 3) die weitere Netzwerkumgebung zu erkunden (über ISO-Layer 3, IP-Layer).

Sämtliche andere Methoden, die Informationen über weitere Endpunkte in einem Computer-Netzwerk identifizieren können, können natürlich ebenfalls in die Erstellung der SOLL-Liste einfließen. Dies könnten z.B. der Befehl "route" für die Ermittlung von Routern oder der Befehl "nslookup" für die Ermittlung von Namensservern sein.

Fig. 5 zeigt eine schematische Darstellung eines Computernetzwerks 500 bestehend aus Intranet 540 und Internet 530, die über einen Router 520 miteinander gekoppelt sind, gemäß einer Ausführungsform.

Hier werden alle Zusammenhänge in einem Bild dargestellt. EP steht für Endpunkt. Ein Endpunkt hat ein oder mehrere Netzwerk-Interfaces. R steht für Router. Ein Router vermittelt zwischen einem lokalen Netzwerk (LAN) und einem Weitverkehrsnetzwerk (WAN). Ein Interface eines Routers ist für einen Endpunkt immer über das LAN erreichbar und dessen IP-Adresse damit via "arp" zu ermitteln. Ein Router selbst stellt immer auch einen Endpunkt dar.

Exemplarisch ist hier die Trennung von einem Intranet zum Internet dargestellt. Man kann entweder eine Whitelist bzw. weiße Liste (mit gültigen IP-Adressen) für das Intranet definieren oder eine Blacklist bzw. schwarze Liste (mit ungültigen IP-Adressen) für das Extranet bzw. Internet festlegen.

Der untere Teil des Computernetzwerks 500 kann dem in Figur 1 dargestellten Computernetzwerk 100 entsprechen, das beispielsweise ein Unternehmensnetzwerk bzw. Intranet 540 bilden kann. Dieses Intranet 540 ist über einen Router R 520 von dem Internet 530 bzw. einem Extranet getrennt. Im Internet 530 befindet sich ein (externer) Endpunkt 510 mit Interface 511, der über ein Netzwerk 501 mit dem Router 520 gekoppelt ist, und über den Router eine (erste) Kommunikationsverbindung 503 zu dem ersten Endpunkt EP1, 110 aufbauen kann. Im Intranet 540 befindet sich ein (interner) Endpunkt 130 mit Interface 131, der über die internen Netzwerke 109, 107, 105 und dazwischenliegenden Routern R1, 140 und R2, 150 eine (zweite) Kommunikationsverbindung 502 zu dem ersten Endpunkt EP1, 110 aufbauen kann. Über den Befehl "netstat" lassen sich, wie oben zu Figur 4 beschrieben, Details zu diesen Kommunikationsverbindungen 503, 502 ermitteln, insbesondere beim Aufbau der jeweiligen Kommunikationsverbindungen 503, 502 genutzt werden.

Die Netzwerkadressen des Internets 530 lassen sich in Form von Blacklist-Einträgen für die Kommunikation ausschließen, d.h. beispielsweise kann die erste Kommunikationsverbindung 503 durch Eintrag der Netzwerkadresse des Interfaces 511 des Endpunkts 510 in einer Schwarzen Liste blockiert werden. Oder alternativ lassen sich nur Kommunikationsverbindungen aufbauen, deren Netzwerkadressen in einer Weißen Liste eingetragen sind, wie z.B. die Netzwerkadresse des Interfaces 131 von Endpunkt 130, der sich im Intranet 540 befindet. Somit kann der Aufbau der zweiten Kommunikationsverbindung 502 (im Intranet 540) zugelassen werden während der Aufbau der ersten Kommunikationsverbindung 503 (ins Internet 530) gesperrt bzw. blockiert werden kann. Damit lässt sich das Intranet 540 nach außen hin abschotten und es kann vermieden werden, dass es zu bösartigen Angriffen von Endpunkten außerhalb des Intranets 540 auf Rechner des Intranets 540 kommt.

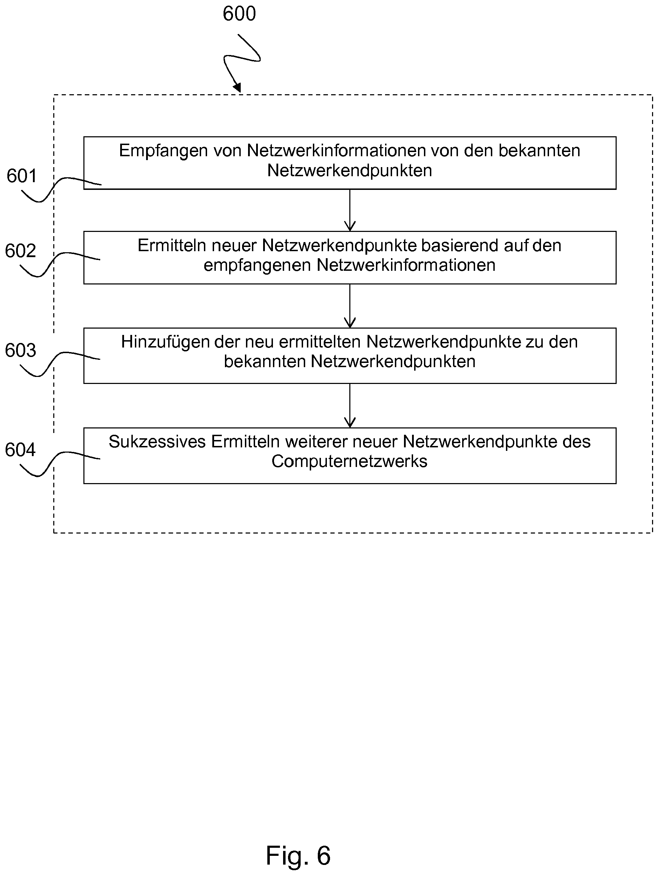

Fig. 6 zeigt eine schematische Darstellung eines Verfahrens 600 zum Inventarisieren eines Computernetzwerks gemäß einer Ausführungsform. Das Computernetzwerk, beispielsweise ein Computernetzwerk 101, wie in den Figuren 1 bis 5 beschrieben, umfasst eine Mehrzahl von Computern, welche Netzwerkendpunkte 110, 120, 130 in dem Computernetzwerk 101 bilden, wobei jeder Netzwerkendpunkt 110, 120, 130 zumindest eine Schnittstelle zu dem Computernetzwerk 101 umfasst, welcher eine Netzwerkadresse und eine physikalische Adresse zugeordnet ist.

Das Verfahren 600 umfasst einen ersten Schritt 601: ausgehend von einer initialen Anzahl von bekannten Netzwerkendpunkten des Computernetzwerks 101: Empfangen 601 der folgenden Netzwerkinformationen von den bekannten Netzwerkendpunkten: die jeweilige Netzwerkadresse und physikalische Adresse der zumindest einen Schnittstelle der bekannten Netzwerkendpunkte, Schnittstellen mit zugehöriger Netzwerkadresse und physikalischer Adresse weiterer Netzwerkendpunkte, die sich in einer lokalen Netzwerkumgebung der bekannten Netzwerkendpunkte befinden, und Netzwerkadressen von für die bekannten Netzwerkendpunkte erreichbaren Schnittstellen weiterer Netzwerkendpunkte, die sich außerhalb der lokalen Netzwerkumgebung der bekannten Netzwerkendpunkte befinden, beispielsweise wie oben zu den Figuren 1 bis 5 beschrieben.

Das Verfahren 600 umfasst einen zweiten Schritt 601: Ermitteln 602 neuer Netzwerkendpunkte basierend auf den empfangenen Netzwerkinformationen, wobei die neuen Netzwerkendpunkte sich nicht unter den bekannten Netzwerkendpunkten befinden, beispielsweise wie oben zu den Figuren 1 bis 5 beschrieben. Das Verfahren 600 umfasst einen dritten Schritt 603: Hinzufügen 603 der neu ermittelten Netzwerkendpunkte zu den bekannten Netzwerkendpunkten, beispielsweise wie oben zu den Figuren 1 bis 5 beschrieben. Das Verfahren 600 umfasst einen vierten Schritt 604: Sukzessives Ermitteln 604 weiterer neuer Netzwerkendpunkte des Computernetzwerks, beispielsweise wie oben zu den Figuren 1 bis 5 beschrieben.

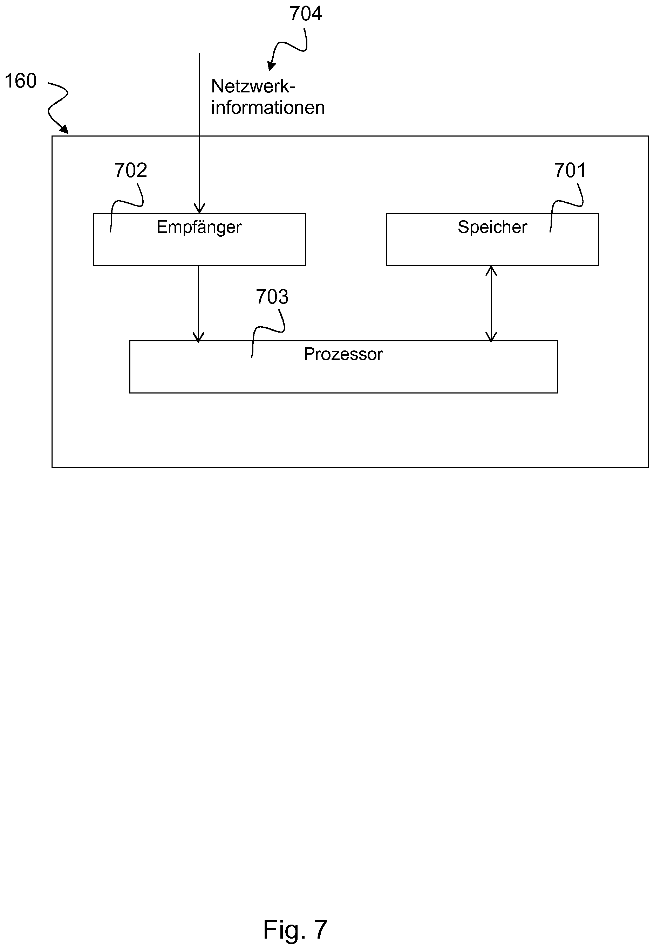

Fig. 7 zeigt ein Blockdiagramm eines Inventarisierungsservers 160 gemäß einer Ausführungsform. Der Inventarisierungsserver 160 dient dem Inventarisieren eines Computernetzwerks, beispielsweise eines Computernetzwerks 101, wie oben zu den Figuren 1 bis 5 beschrieben, mit einer Mehrzahl von Computern, welche Netzwerkendpunkte 110, 120, 130 in dem Computernetzwerk 101 bilden, wobei jeder Netzwerkendpunkt 110, 120, 130 zumindest eine Schnittstelle 111, 112, 121, 131 zu dem Computernetzwerk 101 umfasst, welcher eine Netzwerkadresse und eine physikalische Adresse zugeordnet ist. Der Inventarisierungsserver 160 umfasst einen Speicher 701, einen Empfänger 702 und einen Prozessor 703.

Der Speicher 701 ist dafür ausgelegt, eine initiale Anzahl von bekannten Netzwerkendpunkten des Computernetzwerks zu speichern. Bei den bekannten Netzwerkendpunkten kann es sich beispielsweise um Netzwerkendpunkte desselben Subnetzes handeln, an welches der Inventarisierungsserver 160 angeschlossen ist, beispielsweise um den Endpunkt EP1, 110 des Subnetzes 105 gemäß Figur 1 oder auch um die beiden Endpunkte EP1, 110 und EP2, 120 der Subnetze 105 und 103 gemäß Figur 1. Der Empfänger 702 ist dafür ausgelegt, von den bekannten Netzwerkendpunkten die folgenden Netzwerkinformationen zu empfangen: die jeweilige Netzwerkadresse und physikalische Adresse der zumindest einen Schnittstelle der bekannten Netzwerkendpunkte, Schnittstellen mit zugehöriger Netzwerkadresse und physikalischer Adresse weiterer Netzwerkendpunkte, die sich in einer lokalen Netzwerkumgebung der bekannten Netzwerkendpunkte befinden, Netzwerkadressen von für die bekannten Netzwerkendpunkte erreichbaren Schnittstellen weiterer Netzwerkendpunkte, die sich außerhalb der lokalen Netzwerkumgebung der bekannten Netzwerkendpunkte befinden, beispielsweise wie oben zu den Figuren 1 bis 6 beschrieben. Der Prozessor 703 ist dafür ausgelegt, basierend auf den empfangenen Netzwerkinformationen neue Netzwerkendpunkte zu ermitteln, die sich nicht unter den bekannten Netzwerkendpunkten befinden, die neu ermittelten Netzwerkendpunkte den im Speicher abgelegten bekannten Netzwerkendpunkten hinzuzufügen und sukzessive weitere neue Netzwerkendpunkte des Computernetzwerks 101 zu ermitteln, beispielsweise wie oben zu den Figuren 1 bis 6 beschrieben.

Der Inventarisierungsserver 160 kann innerhalb oder auch außerhalb des zu inventarisierenden Computernetzwerks 101 angeordnet sein.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Figur 6 beschriebene Verfahren 600 ausgeführt werden kann, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, ausgehend von einer initialen Anzahl von bekannten Netzwerkendpunkten des Computernetzwerks die folgenden Netzwerkinformationen von den bekannten Netzwerkendpunkten zu empfangen 601: die jeweilige Netzwerkadresse und physikalische Adresse der zumindest einen Schnittstelle der bekannten Netzwerkendpunkte, Schnittstellen mit zugehöriger Netzwerkadresse und physikalischer Adresse weiterer Netzwerkendpunkte, die sich in einer lokalen Netzwerkumgebung der bekannten Netzwerkendpunkte befinden, und Netzwerkadressen von für die bekannten Netzwerkendpunkte erreichbaren Schnittstellen weiterer Netzwerkendpunkte, die sich außerhalb der lokalen Netzwerkumgebung der bekannten Netzwerkendpunkte befinden. Die computerlesbaren Programmittel können den Computer ferner veranlassen, neue Netzwerkendpunkte basierend auf den empfangenen Netzwerkinformationen zu ermitteln 602, wobei die neuen Netzwerkendpunkte sich nicht unter den bekannten Netzwerkendpunkten befinden. Die computerlesbaren Programmittel können den Computer ferner veranlassen, die neu ermittelten Netzwerkendpunkte zu den bekannten Netzwerkendpunkten hinzuzufügen 603 und weitere neue Netzwerkendpunkte des Computernetzwerks sukzessive zu ermitteln 604.

Der Computer kann ein PC sein, beispielsweise ein PC eines Computernetzwerks, z.B. des Computernetzwerk 100 wie in Figur 1 beschrieben. Der Computer kann als ein Chip, ein ASIC, ein Mikroprozessor oder ein Signalprozessor realisiert sein und in einem Computernetzwerk, beispielsweise als Prozessor eines Endpunkts 110, 120, 130 wie in Figur 1 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

## Patentansprüche

1. Netzwerkinventarisierungssystem (100), mit
einer Mehrzahl von Computern, welche Netzwerkendpunkte (110, 120, 130) in einem Computernetzwerk (101) bilden, wobei jeder Netzwerkendpunkt (110, 120, 130) zumindest eine Schnittstelle (111, 112, 213) zu dem Computernetzwerk (101) umfasst, welcher eine Netzwerkadresse (IP1, IP2, IP3) und eine physikalische Adresse (MAC1, MAC2, MAC3) zugeordnet ist; und
einem Inventarisierungsserver (160) zur Inventarisierung des Computernetzwerks (101), wobei dem Inventarisierungsserver (160) eine initiale Anzahl von Netzwerkendpunkten (110) des Computernetzwerks (101) bekannt ist,
wobei der Inventarisierungsserver (160) ausgebildet ist, von den ihm bekannten Netzwerkendpunkten (110) die folgenden Netzwerkinformationen zu empfangen:
die jeweilige Netzwerkadresse (IP1, IP2, IP3) und physikalische Adresse (MAC1, MAC2, MAC3) der zumindest einen Schnittstelle (111, 112, 213) der bekannten Netzwerkendpunkte (110),
Schnittstellen (121, 331) mit zugehöriger Netzwerkadresse und physikalischer Adresse weiterer Netzwerkendpunkte (120, 330) eines für die bekannten Netzwerkendpunkte (110) erreichbaren Subnetzwerks (103) über ein Open Systems Interconnection, OSI-Schicht 2 Protokoll,
Netzwerkadressen von für die bekannten Netzwerkendpunkte (110) erreichbaren Schnittstellen (131, 421, 511) weiterer Netzwerkendpunkte (130, 420, 510), die sich außerhalb des für die bekannten Netzwerkendpunkte (110) erreichbaren Subnetzwerks (103) befinden, über ein OSI-Schicht 3 Protokoll und
basierend auf den empfangenen Netzwerkinformationen neue Netzwerkendpunkte (120, 130, 330, 420, 510) zu ermitteln, die sich nicht unter den bekannten Netzwerkendpunkten (110) befinden, die neu ermittelten Netzwerkendpunkte (120, 130, 330, 420, 510) den bekannten Netzwerkendpunkten (110) hinzuzufügen und sukzessive weitere neue Netzwerkendpunkte des Computernetzwerks (101) zu ermitteln,
wobei der Inventarisierungsserver (160) ferner ausgebildet ist:
basierend auf den empfangenen Netzwerkinformationen über die bekannten Netzwerkendpunkte (110) eine IST-Liste mit Schnittstellen (111, 112, 213) bekannter Netzwerkendpunkte (110) zu erstellen und basierend auf einem Abgleich der IST-Liste mit einer weißen Liste (Whitelist) (540) und einer schwarzen Liste (Blacklist) (530) ein Inventar des Computernetzwerks (101) zu erstellen,
wobei die Whitelist (540) Netzwerkadressen umfasst, die in einen vorgegebenen Bereich von Netzwerkadressen fallen, und
wobei die Blacklist (530) Netzwerkadressen, die außerhalb eines vorgegebenen Bereichs von Netzwerkadressen liegen, sowie Netzwerkadressen bereits erkannter Bedrohungen umfasst.

2. Netzwerkinventarisierungssystem (100) nach Anspruch 1,
wobei der Inventarisierungsserver (160) ausgebildet ist, die Netzwerkinformationen von den ihm bekannten Netzwerkendpunkten (110) aktiv anzufordern oder passiv einzusammeln.

3. Netzwerkinventarisierungssystem (100) nach Anspruch 1 oder 2,
wobei die Netzwerkendpunkte (110, 120, 130) ausgebildet sind, die Netzwerkinformationen einmalig oder zyklisch zu erfassen und dem Inventarisierungsserver (160) bereitzustellen.

4. Netzwerkinventarisierungssystem (100) nach einem der vorstehenden Ansprüche, wobei die Netzwerkendpunkte (110, 120, 130) ausgebildet sind:
die Schnittstellen (121, 331) der weiteren Netzwerkendpunkte (120, 330) des für die bekannten Netzwerkendpunkte (110) erreichbaren Subnetzwerks (103) über ein OSI-Schicht 2 Protokoll zu bestimmen, und
die Netzwerkadressen von erreichbaren Schnittstellen (131, 421, 511) weiterer Netzwerkendpunkte (130, 420, 510), die sich außerhalb des für die bekannten Netzwerkendpunkte erreichbaren Subnetzwerks (103) befinden, über ein OSI-Schicht 3 Protokoll zu bestimmen.

5. Netzwerkinventarisierungssystem (100) nach einem der vorstehenden Ansprüche, wobei die Netzwerkendpunkte (110) ausgebildet sind:
die Netzwerkadresse (IP1, IP2, IP3) und physikalische Adresse (MAC1, MAC2, MAC3) ihrer zumindest einen Schnittstelle (111, 112, 213) über einen "ifconfig" (202), "ipconfig", "ip" oder gleichwertigen Befehl zu ermitteln,
die Schnittstellen (121, 331) der weiteren Netzwerkendpunkte (120, 330) des für die bekannten Netzwerkendpunkte (110) erreichbaren Subnetzwerks (103) über einen "arp" (302) oder gleichwertigen Befehl zu ermitteln, und
die Netzwerkadressen von erreichbaren Schnittstellen (131, 421, 511) weiterer Netzwerkendpunkte (130, 420, 511), die sich außerhalb des für die bekannten Netzwerkendpunkte erreichbaren Subnetzwerks (103) befinden, über einen "netstat" (402) oder gleichwertigen Befehl zu ermitteln.

6. Netzwerkinventarisierungssystem (100) nach einem der vorstehenden Ansprüche,
wobei der Inventarisierungsserver (160) ferner ausgebildet ist, von den ihm bekannten Netzwerkendpunkten (110) die Routing-Einstellungen und/oder Informationen zum Domain Name System, DNS-Dienst zu empfangen und darauf basierend weitere Netzwerkendpunkte zu ermitteln.

7. Netzwerkinventarisierungssystem (100) nach einem der vorstehenden Ansprüche, wobei der Inventarisierungsserver (160) ausgebildet ist:
basierend auf den empfangenen Netzwerkinformationen über die weiteren Netzwerkendpunkte (120, 330, 130, 420, 510) eine SOLL-Liste mit Schnittstellen (111, 112, 213, 121, 331, 131, 421, 511) von erfassten Netzwerkendpunkten (110, 120, 330, 130, 420, 510) zu erstellen, und
basierend auf einer Abweichung der IST-Liste von der SOLL-Liste eine DELTA-Liste mit Schnittstellen (121, 331, 131, 421, 511) neuer Netzwerkendpunkte (120, 330, 130, 420, 510) zu erstellen.

8. Netzwerkinventarisierungssystem (100) nach Anspruch 7,
wobei der Inventarisierungsserver (160) ausgebildet ist, sukzessive von den neuen Netzwerkendpunkten (120, 330, 130, 420, 510) der DELTA-Liste Netzwerkinformationen zu empfangen bis die DELTA-Liste leer ist oder gegen eine Anzahl von Schnittstellen neuer Netzwerkendpunkte konvergiert.

9. Netzwerkinventarisierungssystem (100) nach Anspruch 7 oder 8,
wobei die Blacklist (530) Netzwerkadressen umfasst, die frei konfigurierbar sind.

10. Netzwerkinventarisierungssystem (100) nach einem der Ansprüche 7 bis 9,
wobei der Inventarisierungsserver (160) ausgebildet ist, die IST-Liste und/oder die DELTA-Liste auf gleiche Netzwerkadressen und/oder gleiche physikalische Adressen von verschiedenen Schnittstellen zu überprüfen und als Duplikat zu markieren.

11. Netzwerkinventarisierungssystem (100) nach Anspruch 10,
wobei der Inventarisierungsserver (160) ausgebildet ist, basierend auf den Schnittstellen (121, 331, 131, 421, 511) der DELTA-Liste und/oder den Duplikatmarkierungen einen Alarm auszulösen und/oder
die Schnittstellen (121, 331, 131, 421, 511) der DELTA-Liste und/oder die Duplikatmarkierungen an ein Auswertungssystem weiterzuleiten.

12. Verfahren (600) zum Inventarisieren eines Computernetzwerks (101) mit einer Mehrzahl von Computern, welche Netzwerkendpunkte (110, 120, 130) in dem Computernetzwerk (101) bilden, wobei jeder Netzwerkendpunkt (110, 120, 130) zumindest eine Schnittstelle zu dem Computernetzwerk (101) umfasst, welcher eine Netzwerkadresse und eine physikalische Adresse zugeordnet ist, wobei das Verfahren (600) die folgenden Schritte umfasst:
ausgehend von einer initialen Anzahl von bekannten Netzwerkendpunkten des Computernetzwerks (101): Empfangen (601) der folgenden Netzwerkinformationen von den bekannten Netzwerkendpunkten:
die jeweilige Netzwerkadresse und physikalische Adresse der zumindest einen Schnittstelle der bekannten Netzwerkendpunkte,
Schnittstellen mit zugehöriger Netzwerkadresse und physikalischer Adresse weiterer Netzwerkendpunkte eines für die bekannten Netzwerkendpunkte erreichbaren Subnetzwerks über ein Open Systems Interconnection, OSI-Schicht 2 Protokoll, und
Netzwerkadressen von für die bekannten Netzwerkendpunkte erreichbaren Schnittstellen weiterer Netzwerkendpunkte, die sich außerhalb des für die bekannten Netzwerkendpunkte erreichbaren Subnetzwerks befinden über ein OSI-Schicht 3 Protokoll;
Ermitteln (602) neuer Netzwerkendpunkte basierend auf den empfangenen Netzwerkinformationen, wobei die neuen Netzwerkendpunkte sich nicht unter den bekannten Netzwerkendpunkten befinden;
Hinzufügen (603) der neu ermittelten Netzwerkendpunkte zu den bekannten Netzwerkendpunkten;
Sukzessives Ermitteln (604) weiterer neuer Netzwerkendpunkte des Computernetzwerks (101);
Erstellen einer IST-Liste mit Schnittstellen (111, 112, 213) bekannter Netzwerkendpunkte (110) basierend auf den empfangenen Netzwerkinformationen über die bekannten Netzwerkendpunkte (110); und
Erstellen eines Inventars des Computernetzwerks (101) basierend auf einem Abgleich der IST-Liste mit einer weißen Liste (Whitelist) (540) und einer schwarzen Liste (Blacklist) (530),
wobei die Whitelist (540) Netzwerkadressen umfasst, die in einen vorgegebenen Bereich von Netzwerkadressen fallen, und
wobei die Blacklist (530) Netzwerkadressen, die außerhalb eines vorgegebenen Bereichs von Netzwerkadressen liegen, sowie Netzwerkadressen bereits erkannter Bedrohungen umfasst.

13. Inventarisierungsserver (160) zum Inventarisieren eines Computernetzwerks (101) mit einer Mehrzahl von Computern, welche Netzwerkendpunkte (110, 120, 130) in dem Computernetzwerk (101) bilden, wobei jeder Netzwerkendpunkt (110, 120, 130) zumindest eine Schnittstelle (111, 112, 121, 131) zu dem Computernetzwerk (101) umfasst, welcher eine Netzwerkadresse und eine physikalische Adresse zugeordnet ist, wobei der Inventarisierungsserver (160) folgendes umfasst:
einen Speicher (701), der ausgebildet ist, eine initiale Anzahl von bekannten Netzwerkendpunkten des Computernetzwerks zu speichern; und
einen Empfänger (702), der ausgebildet ist, von den bekannten Netzwerkendpunkten die folgenden Netzwerkinformationen zu empfangen:
die jeweilige Netzwerkadresse und physikalische Adresse der zumindest einen Schnittstelle der bekannten Netzwerkendpunkte,
Schnittstellen mit zugehöriger Netzwerkadresse und physikalischer Adresse weiterer Netzwerkendpunkte eines für die bekannten Netzwerkendpunkte erreichbaren Subnetzwerks über ein Open Systems Interconnection, OSI-Schicht 2 Protokoll,
Netzwerkadressen von für die bekannten Netzwerkendpunkte erreichbaren Schnittstellen weiterer Netzwerkendpunkte, die sich außerhalb des für die bekannten Netzwerkendpunkte erreichbaren Subnetzwerks befinden, über ein OSI-Schicht 3 Protokoll; und
einen Prozessor (703), der ausgebildet ist, basierend auf den empfangenen Netzwerkinformationen neue Netzwerkendpunkte zu ermitteln, die sich nicht unter den bekannten Netzwerkendpunkten befinden, die neu ermittelten Netzwerkendpunkte den im Speicher abgelegten bekannten Netzwerkendpunkten hinzuzufügen und sukzessive weitere neue Netzwerkendpunkte des Computernetzwerks (101) zu ermitteln,
wobei der Inventarisierungsserver (160) ausgebildet ist:
basierend auf den empfangenen Netzwerkinformationen über die bekannten Netzwerkendpunkte (110) eine IST-Liste mit Schnittstellen (111, 112, 213) bekannter Netzwerkendpunkte (110) zu erstellen und basierend auf einem Abgleich der IST-Liste mit einer weißen Liste (Whitelist) (540) und einer schwarzen Liste (Blacklist) (530) ein Inventar des Computernetzwerks (101) zu erstellen,
wobei die Whitelist (540) Netzwerkadressen umfasst, die in einen vorgegebenen Bereich von Netzwerkadressen fallen, und
wobei die Blacklist (530) Netzwerkadressen, die außerhalb eines vorgegebenen Bereichs von Netzwerkadressen liegen, sowie Netzwerkadressen bereits erkannter Bedrohungen umfasst.

## Claims

1. Network inventory system (100) having
a plurality of computers which form network end points (110, 120, 130) in a computer network (101), wherein each network end point (110, 120, 130) comprises at least one interface (111, 112, 213) to the computer network (101), which interface is assigned a network address (IP1, IP2, IP3) and a physical address (MAC1, MAC2, MAC3); and
an inventory server (160) for inventorying the computer network (101), wherein an initial number of network end points (110) of the computer network (101) is known to the inventory server (160),
wherein the inventory server (160) is configured to receive the following network information from the network end points (110) known to it:
the respective network address (IP1, IP2, IP3) and physical address (MAC1, MAC2, MAC3) of the at least one interface (111, 112, 213) of the known network end points (110) ,
interfaces (121, 331) with an associated network address and physical address of further network end points (120, 330) of a subnetwork (103) reachable for the known network end points (110) via an Open Systems Interconnection, OSI, layer 2 protocol,
network addresses of interfaces (131, 421, 511), reachable for the known network end points (110), of further network end points (130, 420, 510) which are outside the subnetwork (103) reachable for the known network end points (110) via an OSI layer 3 protocol, and
to determine new network end points (120, 130, 330, 420, 510) which are not among the known network end points (110) on the basis of the received network information, to add the newly determined network end points (120, 130, 330, 420, 510) to the known network end points (110) and to gradually determine further new network end points of the computer network (101),
wherein the inventory server (160) is also configured:
to create an ACTUAL list containing interfaces (111, 112, 213) of known network end points (110) on the basis of the received network information relating to the known network end points (110) and to create an inventory of the computer network (101) on the basis of a comparison of the ACTUAL list with a whitelist (540) and a blacklist (530),
wherein the whitelist (540) comprises network addresses which fall in a predefined range of network addresses, and
wherein the blacklist (530) comprises network addresses which are outside a predefined range of network addresses and network addresses of threats which have already been identified.

2. Network inventory system (100) according to Claim 1,
wherein the inventory server (160) is configured to actively request or passively collect the network information from the network end points (110) known to it.

3. Network inventory system (100) according to Claim 1 or 2,
wherein the network end points (110, 120, 130) are configured to capture the network information once or cyclically and to make it available to the inventory server (160).

4. Network inventory system (100) according to one of the preceding claims, wherein the network end points (110, 120, 130) are configured:
to determine the interfaces (121, 331) of the further network end points (120, 330) of the subnetwork (103) reachable for the known network end points (110) via an OSI layer 2 protocol, and
to determine the network addresses of reachable interfaces (131, 421, 511) of further network end points (130, 420, 510) which are outside the subnetwork (103) reachable for the known network end points via an OSI layer 3 protocol.

5. Network inventory system (100) according to one of the preceding claims, wherein the network end points (110) are configured:
to determine the network address (IP1, IP2, IP3) and physical address (MAC1, MAC2, MAC3) of their at least one interface (111, 112, 213) via an "ifconfig" (202), "ipconfig", "ip" or equivalent command,
to determine the interfaces (121, 331) of the further network end points (120, 330) of the subnetwork (103) reachable for the known network end points (110) via an "arp" (302) or equivalent command, and
to determine the network addresses of reachable interfaces (131, 421, 511) of further network end points (130, 420, 511) which are outside the subnetwork (103) reachable for the known network end points via a "netstat" (402) or equivalent command.

6. Network inventory system (100) according to one of the preceding claims,
wherein the inventory server (160) is also configured to receive the routing settings and/or information relating to the Domain Name System, DNS, service from the network end points (110) known to it and to determine further network end points on the basis thereof.

7. Network inventory system (100) according to one of the preceding claims, wherein the inventory server (160) is configured:
to create a DESIRED list containing interfaces (111, 112, 213, 121, 331, 131, 421, 511) of captured network end points (110, 120, 330, 130, 420, 510) on the basis of the received network information relating to the further network end points (120, 330, 130, 420, 510), and
to create a DELTA list containing interfaces (121, 331, 131, 421, 511) of new network end points (120, 330, 130, 420, 510) on the basis of a deviation of the ACTUAL list from the DESIRED list.

8. Network inventory system (100) according to Claim 7,
wherein the inventory server (160) is configured to gradually receive network information from the new network end points (120, 330, 130, 420, 510) in the DELTA list until the DELTA list is empty or converges towards a number of interfaces of new network end points.

9. Network inventory system (100) according to Claim 7 or 8,
wherein the blacklist (530) comprises network addresses which are freely configurable.

10. Network inventory system (100) according to one of Claims 7 to 9,
wherein the inventory server (160) is configured to check the ACTUAL list and/or the DELTA list for identical network addresses and/or identical physical addresses of different interfaces and to mark them as a duplicate.

11. Network inventory system (100) according to Claim 10,
wherein the inventory server (160) is configured to trigger an alarm on the basis of the interfaces (121, 331, 131, 421, 511) in the DELTA list and/or the duplicate markings, and/or
to forward the interfaces (121, 331, 131, 421, 511) in the DELTA list and/or the duplicate markings to an evaluation system.

12. Method (600) for inventorying a computer network (101) having a plurality of computers which form network end points (110, 120, 130) in the computer network (101), wherein each network end point (110, 120, 130) comprises at least one interface to the computer network (101), which interface is assigned a network address and a physical address, wherein the method (600) comprises the following steps of:
starting from an initial number of known network end points of the computer network (101): receiving (601) the following network information from the known network end points:
the respective network address and physical address of the at least one interface of the known network end points,
interfaces with an associated network address and physical address of further network end points of a subnetwork reachable for the known network end points via an Open Systems Interconnection, OSI, layer 2 protocol,
network addresses of interfaces, reachable for the known network end points, of further network end points which are outside the subnetwork reachable for the known network end points via an OSI layer 3 protocol;
determining (602) new network end points on the basis of the received network information, wherein the new network end points are not among the known network end points,
adding (603) the newly determined network end points to the known network end points;
gradually determining (604) further new network end points of the computer network (101);
creating an ACTUAL list containing interfaces (111, 112, 213) of known network end points (110) on the basis of the received network information relating to the known network end points (110); and
creating an inventory of the computer network (101) on the basis of a comparison of the ACTUAL list with a whitelist (540) and a blacklist (530),
wherein the whitelist (540) comprises network addresses which fall in a predefined range of network addresses, and
wherein the blacklist (530) comprises network addresses which are outside a predefined range of network addresses and network addresses of threats which have already been identified.

13. Inventory server (160) for inventorying a computer network (101) having a plurality of computers which form network end points (110, 120, 130) in the computer network (101), wherein each network end point (110, 120, 130) comprises at least one interface (111, 112, 121, 131) to the computer network (101), which interface is assigned a network address and a physical address, wherein the inventory server (160) comprises the following:
a memory (701) which is configured to store an initial number of known network end points of the computer network; and
a receiver (702) which is configured to receive the following network information from the known network end points:
the respective network address and physical address of the at least one interface of the known network end points,
interfaces with an associated network address and physical address of further network end points of a subnetwork reachable for the known network end points via an Open Systems Interconnection, OSI, layer 2 protocol,
network addresses of interfaces, reachable for the known network end points, of further network end points which are outside the subnetwork reachable for the known network end points via an OSI layer 3 protocol, and
a processor (703) which is configured to determine new network end points which are not among the known network end points on the basis of the received network information, to add the newly determined network end points to the known network end points stored in the memory and to gradually determine further new network end points of the computer network (101),
wherein the inventory server (160) is configured:
to create an ACTUAL list containing interfaces (111, 112, 213) of known network end points (110) on the basis of the received network information relating to the known network end points (110) and to create an inventory of the computer network (101) on the basis of a comparison of the ACTUAL list with a whitelist (540) and a blacklist (530),
wherein the whitelist (540) comprises network addresses which fall in a predefined range of network addresses, and
wherein the blacklist (530) comprises network addresses which are outside a predefined range of network addresses and network addresses of threats which have already been identified.

## Revendications

1. Système (100) d'inventaire de réseau, le système présentant
plusieurs ordinateurs qui forment des points terminaux (110, 120, 130) dans un réseau informatique (101), chaque point terminal (110, 120, 130) comportant au moins une interface (111, 112, 213) avec le réseau informatique (101), une adresse réseau (IP1, IP2, IP3) et une adresse physique (MAC1, MAC2, MAC3) étant associées à la ou aux interfaces,
un serveur d'inventaire (160) qui assure l'inventaire du réseau informatique (101), le serveur d'inventaire (160) connaissant le nombre initial de points terminaux (110) du réseau informatique (101), le serveur d'inventaire (160) étant configuré pour recevoir des points terminaux (110) connus de lui les informations suivantes concernant le réseau :
l'adresse réseau (IP1, IP2, IP3) et l'adresse physique (MAC1, MAC2, MAC3) de la ou des interfaces (111, 112, 213) des points terminaux (110) connus,
par l'intermédiaire d'une interconnexion systèmes ouverts, protocole OSI couche 2, les interfaces (121, 331) avec l'adresse réseau et l'adresse physique associées d'autres points terminaux (120, 330) d'un sous-réseau (103) qui peut être atteint par les points terminaux (110) connus,
par l'intermédiaire d'un protocole OSI couche 3, les adresses réseau d'interfaces (131, 421, 511), qui peuvent être atteintes par les points terminaux (110) connus, d'autres points terminaux (130, 420, 510) qui se trouvent à l'extérieur du sous-réseau (103) qui peut être atteint par les points terminaux (110) connus et
sur la base des informations reçues sur le réseau, déterminer de nouveaux points terminaux (120, 130, 330, 420, 510) qui ne sont pas situés parmi les points terminaux connus (110), ajouter les points terminaux (120, 130, 330, 420, 510) nouvellement déterminés aux points terminaux (110) connus et déterminer successivement d'autres nouveaux points terminaux du réseau informatique (101),
le serveur d'inventaire (160) étant en outre configuré pour
sur la base des informations réseau reçues à propos des points terminaux (110) connus, établir une liste REELLE présentant les interfaces (111, 112, 213) de points terminaux (110) connus et, sur la base d'une comparaison entre la liste REELLE, une liste blanche ("Whitelist") (540) et une liste noire ("Blacklist") (530), établir un inventaire du réseau informatique (101), la "Whitelist" (540) comportant des adresses réseau qui sont situées dans une plage prédéterminée d'adresses réseau et la "Blacklist" (530) comportant des adresses réseau qui sont situées à l'extérieur d'une plage prédéterminée d'adresses réseau ainsi que des adresses réseau de menaces qui ont déjà été détectées.

2. Système (100) d'inventaire de réseau selon la revendication 1, dans lequel le serveur d'inventaire (160) est configuré pour demander activement les informations réseau aux points terminaux (110) connus de lui ou pour les rassembler passivement.

3. Système (100) d'inventaire de réseau selon les revendications 1 ou 2, dans lequel les points terminaux (110, 120, 130) sont configurés pour saisir une fois ou cycliquement les informations réseau et les délivrer au serveur d'inventaire (160).

4. Système (100) d'inventaire de réseau selon l'une des revendications précédentes, dans lequel les points terminaux (110, 120, 130) sont configurés pour :
par l'intermédiaire d'une interconnexion systèmes ouverts, protocole OSI couche 2, déterminer les interfaces (121, 331) d'autres points terminaux (120, 330) du sous-réseau (103) qui peut être atteint par les points terminaux (110) connus, et
par l'intermédiaire d'un protocole OSI couche 3, trouver les adresses réseau d'interfaces (131, 421, 511) d'autres points terminaux (130, 420, 510) qui se trouvent à l'extérieur du sous-réseau (103) qui peut être atteint par les points terminaux connus.

5. Système (100) d'inventaire de réseau selon l'une des revendications précédentes, dans lequel les points terminaux (110) sont configurés pour
par l'intermédiaire d'une commande "ifconfig" (202), "ipconfig", "ip" ou d'une commande équivalente, déterminer les déterminer l'adresse réseau (IP1, IP2, IP3) et l'adresse physique (MAC1, MAC2, MAC3) de leur ou leurs interfaces (111, 112, 213),
par l'intermédiaire d'une commande "arp" (302) ou d'une commande équivalente, déterminer les interfaces (121, 331) des autres points terminaux (120, 330) du sous-réseau (103) qui peut être atteint par les points terminaux (110) connus et
par l'intermédiaire d'une commande "netstat" (402) ou d'une commande équivalente, trouver les adresses réseau d'interfaces (131, 421, 511) d'autres points terminaux (130, 420, 511) qui se trouvent à l'extérieur du sous-réseau (103) qui peut être atteint par les points terminaux connus.

6. Système (100) d'inventaire de réseau selon l'une des revendications précédentes, dans lequel le serveur d'inventaire (160) est en outre configuré pour recevoir des points terminaux (110) connus de lui les réglages de routage et/ou les informations concernant le système de noms de domaine, service DNS, et déterminer sur cette base d'autres points terminaux du réseau.

7. Système (100) d'inventaire de réseau selon l'une des revendications précédentes, dans lequel le serveur d'inventaire (160) est configuré pour
sur la base des informations réseau qu'il a reçues par l'intermédiaire des autres points terminaux (120, 330, 130, 420, 510) du réseau, établir une liste PRESCRITE contenant les interfaces (111, 112, 213, 121, 331, 131, 421, 511) de points terminaux (110, 120, 330, 130, 420, 510) qui ont été saisis,
sur la base d'un écart entre la liste REELLE et la liste PRESCRITE, établir une liste DELTA contenant des interfaces (121, 331, 131, 421, 511) de nouveaux points terminaux (120, 330, 130, 420, 510) du réseau.

8. Système (100) d'inventaire de réseau selon la revendication 7, dans lequel le serveur d'inventaire (160) est configuré pour recevoir successivement des nouveaux points terminaux (120, 330, 130, 420, 510) du réseau les informations concernant la liste DELTA jusqu'à ce que la liste DELTA soit vide ou converge vers un nombre d'interfaces de nouveaux points terminaux du réseau.

9. Système (100) d'inventaire de réseau selon les revendications 7 ou 8, dans lequel la "Blacklist" (530) comporte des adresses de réseau qui peuvent être configurées librement.

10. Système (100) d'inventaire de réseau selon l'une des revendications 7 à 9, dans lequel le serveur d'inventaire (160) est configuré pour vérifier la présence sur la liste REELLE et/ou sur la liste DELTA d'adresses réseau identiques et/ou d'adresses physiques identiques de différentes interfaces, et de les désigner comme duplicata.

11. Système (100) d'inventaire de réseau selon la revendication 10, dans lequel le serveur d'inventaire (160) est configuré pour déclencher une alarme sur la base des interfaces (121, 331, 131, 421, 511) de liste DELTA et/ou des repérages de duplicata et/ou pour transmettre les repérages de duplicata à un système d'évaluation.

12. Procédé (600) d'établissement de l'inventaire d'un réseau informatique (101) contenant plusieurs ordinateurs qui forment des points terminaux (110, 120, 130) dans le réseau informatique (101), chaque point terminal (110, 120, 130) comportant au moins une interface avec le réseau informatique (101), une adresse réseau et une adresse physique étant associées à la ou aux interfaces, le procédé (600) comportant les étapes suivantes :
partant d'un nombre initial de points terminaux connus du réseau informatique (101), recevoir (601) des points terminaux connus les informations réseau suivantes :
l'adresse réseau et l'adresse physique de la ou des interfaces des points terminaux connus,
par l'intermédiaire d'une interconnexion systèmes ouverts, protocole OSI couche 2, les interfaces, ainsi que l'adresse réseau et l'adresse physique de ces interfaces, d'autres points terminaux d'un sous-réseau qui peut être atteint par les points terminaux connus,
par l'intermédiaire d'un protocole OSI couche 3, trouver les adresses réseau d'interfaces, qui peuvent être atteintes par les points terminaux connus, d'autres points terminaux qui se trouvent à l'extérieur du sous-réseau qui peut être atteint par les points terminaux connus,
déterminer (602) de nouveaux points terminaux sur la base des informations réseau qui ont été reçues, les nouveaux points terminaux n'étant pas parmi les points terminaux connus,
ajouter (603) les points terminaux nouvellement déterminés aux points terminaux connus,
déterminer successivement (604) d'autres nouveaux points terminaux du réseau informatique (101),
sur la base des informations réseau reçues à propos des points terminaux (110) connus, établir une liste REELLE présentant les interfaces (111, 112, 213) de points terminaux (110) connus et, sur la base d'une comparaison entre la liste REELLE, une liste blanche ("Whitelist") (540) et une liste noire ("Blacklist") (530), établir un inventaire du réseau informatique (101), la "Whitelist" (540) comportant des adresses réseau qui sont situées dans une plage prédéterminée d'adresses réseau et la "Blacklist" (530) comportant des adresses réseau qui sont situées à l'extérieur d'une plage prédéterminée d'adresses réseau ainsi que des adresses réseau de menaces qui ont déjà été détectées.

13. Serveur d'inventaire établissant l'inventaire d'un réseau informatique (101), le serveur d'inventaire (160) comportant :
une mémoire (701) configurée pour conserver le nombre initial des points terminaux connus du réseau informatique,
un récepteur (702) configuré pour recevoir des points terminaux connus les informations réseau suivantes :
l'adresse réseau et l'adresse physique de la ou des interfaces des points terminaux connus,
par l'intermédiaire d'une interconnexion systèmes ouverts, protocole OSI couche 2, les interfaces, ainsi que l'adresse réseau et l'adresse physique de ces interfaces, d'autres points terminaux d'un sous-réseau qui peut être atteint par les points terminaux connus,
par l'intermédiaire d'un protocole OSI couche 3, trouver les adresses réseau d'interfaces, qui peuvent être atteintes par les points terminaux connus, d'autres points terminaux qui se trouvent à l'extérieur du sous-réseau qui peut être atteint par les points terminaux connus, et
un processeur (703) configuré pour déterminer de nouveaux points terminaux sur la base des informations réseau qui ont été reçues, les nouveaux points terminaux n'étant pas parmi les points terminaux connus, ajouter les points terminaux nouvellement déterminés aux points terminaux connus conservés dans la mémoire et déterminer successivement d'autres nouveaux points terminaux du réseau informatique (101),
le serveur d'inventaire (160) étant configuré pour
sur la base des informations réseau reçues à propos des points terminaux (110) connus, établir une liste REELLE présentant les interfaces (111, 112, 213) de points terminaux (110) connus et, sur la base d'une comparaison entre la liste REELLE, une liste blanche ("Whitelist") (540) et une liste noire ("Blacklist") (530), établir un inventaire du réseau informatique (101), la "Whitelist" (540) comportant des adresses réseau qui sont situées dans une plage prédéterminée d'adresses réseau et la "Blacklist" (530) comportant des adresses réseau qui sont situées à l'extérieur d'une plage prédéterminée d'adresses réseau ainsi que des adresses réseau de menaces qui ont déjà été détectées.
